(19) Europäisches Patentamt
European Patent Office
Office européen des brevets

(11) EP 3 523 390 B1

(12) FASCICULE DE BREVET EUROPEEN

(45) Date de publication et mention de la délivrance du brevet:
**08.05.2024 Bulletin 2024/19**

(21) Numéro de dépôt: **17787239.7**

(22) Date de dépôt: **09.10.2017**

(51) Classification Internationale des Brevets (IPC):
***C09K 5/04*** *(2006.01)* ***C10M 171/00*** *(2006.01)*

(52) Classification Coopérative des Brevets (CPC):
**C09K 5/045; C10M 171/008;** C09K 2205/126; C09K 2205/22; C10M 2207/2835; C10N 2020/101; C10N 2040/30; C10N 2070/00

(86) Numéro de dépôt international:
**PCT/FR2017/052765**

(87) Numéro de publication internationale:
**WO 2018/069621 (19.04.2018 Gazette 2018/16)**

# (54) UTILISATION DE COMPOSITIONS À BASE DE TÉTRAFLUOROPROPÈNE

VERWENDUNG VON AUF TETRAFLUORPROPEN BASIERENDEN ZUSAMMENSETZUNGEN

USE OF TETRAFLUOROPROPENE-BASED COMPOSITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2016 FR 1659747**

(43) Date de publication de la demande:
**14.08.2019 Bulletin 2019/33**

(73) Titulaire: **Arkema France**
**92700 Colombes (FR)**

(72) Inventeur: **RACHED, Wissam**
**69630 Chaponost (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**US-A- 5 612 299**
**US-A1- 2009 267 019**
**US-A1- 2012 068 104**
**US-A1- 2016 009 974**

- **Joseph A Karnaz: "Lubricant Development To Meet Lower GWP Refrigerant Challenges", International Refrigeration and Air Conditioning Conference, 1 janvier 2014 (2014-01-01), XP055365964, Extrait de l'Internet: URL:http://docs.lib.purdue.edu/cgi/viewcontent.cgi?article=2443&context=iracc [extrait le 2017-04-20]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### DOMAINE DE L'INVENTION

La présente invention concerne l'utilisation d'une composition à base de tétrafluoropropène et d'au moins un lubrifiant, dans la réfrigération, climatisation et pompe à chaleur.

### ARRIERE-PLAN TECHNIQUE

Les problèmes posés par les substances appauvrissant la couche d'ozone atmosphérique ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la climatisation a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1430) est considéré comme ayant un pouvoir de réchauffement élevé. La contribution à l'effet de serre d'un fluide est quantifiée par un critère, le GWP (Global Warming Potential) qui résume le pouvoir de réchauffement en prenant une valeur de référence de 1 pour le dioxyde de carbone.

Les hydrofluorooléfines (HFO) ont un pouvoir de réchauffement peu élevé et donc répondent aux objectifs fixés par le protocole de Kyoto. Le document JP 4-110388 divulgue les hydrofluoropropènes comme agent de transfert de chaleur.

Dans le domaine industriel, les machines frigorifiques les plus employées sont basées sur le refroidissement par évaporation d'un fluide frigorigène liquide. Après vaporisation, le fluide est compressé puis refroidi afin de repasser à l'état liquide et poursuivre ainsi le cycle.

Les huiles de lubrification sont nécessaires pour assurer le bon fonctionnement des pièces mécaniques mobiles, et notamment assurer la lubrification des paliers du compresseur.
Or, le fluide frigorigène, qui est à chaque passage dans le compresseur en contact avec le lubrifiant présent sur les parties mobiles, tend à en emporter une certaine quantité, laquelle accompagne le fluide frigorigène dans son cycle, et se retrouve donc dans l'évaporateur. Pour pallier à ce problème de migration de l'huile, il est connu d'utiliser un système de séparation d'huile, capable de purger l'huile accumulée de la haute pression à la sortie du compresseur vers la basse pression (à l'entrée du compresseur).

Grâce à leur stabilité thermique et leur miscibilité avec les HFO, notamment les HFO-1234, les huiles POE sont couramment utilisées dans les systèmes de transfert de chaleur, notamment en réfrigération et/ou conditionnement d'air.

Le document US 2016/009974 décrit des mélanges de réfrigérant de 15 à 50% en poids d'une oléfine fluorée et de 50 à 85% en poids d'un alcane fluoré et divulgue une composition de 20-40% en poids d'une oléfine fluorée telle que le 1,1,1,3-tetrafluoropropène et de 60-80 % en poids d'un alcane fluoré tel que le difluorométhane.

Le document US 2012/068104 décrit un système de réfrigération comprenant des mélanges du 2,3,3,3-tétrafluoropropène et du 1,1,2,2- tétrafluoroéthane.

Toutefois, en raison d'une bonne solubilité des HFO-1234 dans les huiles POE, un problème est constaté sur les systèmes de transfert de chaleur comprenant un séparateur d'huile : une quantité relativement importante de fluide frigorigène reste piégée par l'huile. La purge de l'huile induit le retour du fluide frigorigène piégé de la sortie du compresseur directement à l'entrée de ce dernier. Ceci a pour conséquence une perte nette d'efficacité pour l'installation, dans la mesure où la totalité du fluide frigorigène n'effectue pas le cycle de réfrigération dans sa globalité, et a également pour conséquence une détérioration de la lubrification de compresseurs, notamment de compresseurs à vis, en raison de quantité plus faible d'huile.

Il existe donc un besoin de trouver de nouvelles compositions permettant notamment de palier au moins l'un des inconvénients susmentionnés.

### DESCRIPTION DE L'INVENTION

La présente invention a pour objet l'utilisation d'une composition comprenant un lubrifiant à base d'esters de polyol, et un fluide frigorigène F comprenant au moins un tétrafluoropropène et au moins un hydrofluorocarbure, dans un système de transfert de chaleur contenant un circuit de compression de vapeur comprenant un séparateur d'huile.

Sauf mention contraire, dans l'ensemble de la demande, les proportions de composés indiquées sont données

en pourcentages massiques.

Les compositions de l'invention permettent avantageusement d'améliorer l'efficacité des systèmes de transfert de chaleur comprenant un séparateur d'huile, notamment par rapport à des compositions HFO-1234/huile POE dépourvues d'hydrofluorocarbures. Les compositions selon l'invention permettent également de réduire la détérioration de la lubrification des compresseurs par rapport au HFO-1234yf seul, en raison notamment de la récupération d'une quantité plus élevée d'huile de lubrification dans le séparateur.

Dans le cadre de l'invention, on entend par « composition de l'invention », une composition comprenant un lubrifiant à base d'esters de polyol, et un fluide frigorigène F comprenant au moins un tétrafluoropropène et au moins un hydrofluorocarbure. Les différents composés et ratios desdits composés, dans la composition selon l'invention, sont décrits ci-après.

*Fluide frigorigène*

Le fluide frigorigène F selon l'invention comprend au moins un tétrafluoropropène (HFO-1234),choisi parmi le HFO-1234yf et le HFO-1234ze.et du 1,1-difluoroéthane (HFC-152a).

Le fluide frigorigène F selon l'invention peut être préparé par tout procédé connu, tel que par exemple par simple mélange des différents ingrédients les uns aux autres.

Dans le cadre de l'invention, le « HFO-1234ze » se réfère au 1,3,3,3-tétrafluoropropène, indépendamment de savoir s'il s'agit de la forme cis (Z) ou trans (E). Le terme « HFO-1234ze » couvre donc le cis-HFO-1234ze, le trans-HFO-1234ze, et tous les mélanges des deux formes isomères dans toutes proportions.

Dans le cadre de l'invention, le « HFO-1234yf » se réfère au 2,3,3,3-tétrafluoropropène.

Selon un mode de réalisation, l'hydrofluorocarbure est choisi dans le groupe constitué du dichlorométhane (HFC-32), du pentafluoroéthane (HFC-125), du 1,1,2,2-tétrafluoroéthane (HFC-134), du 1,1,1,2-tétrafluoroéthane (HFC-134a), du fluoroéthane (HFC-161), du 1,1,1,2,3,3,3-heptafluoropropane (HFC-227ea), du 1,1,1-trifluoropropane (HFC-263fb), et de leurs mélanges.

Selon un mode de réalisation, le fluide frigorigène F comprend deux tétrafluoropropènes, notamment le HFO-1234yf et le HFO-1234ze.

Selon des modes de réalisation particuliers, le fluide frigorigène F selon l'invention est une composition binaire (consistant en deux composés de transfert de chaleur) ou ternaire (consistant en trois composés de transfert de chaleur) ou quaternaire (consistant en quatre composés de transfert de chaleur) ou quinternaire (consistant en cinq composés de transfert de chaleur).

Des impuretés peuvent être présentes ou non dans de tels fluides frigorigènes F. Lorsqu'elles sont présentes, elles peuvent représenter moins de 1 %, de préférence moins de 0,5 %, de préférence moins de 0,1 %, de préférence moins de 0,05 % et de préférence moins de 0,01 % dudit fluide.

Selon un mode de réalisation, le fluide frigorigène F consiste essentiellement en deux, trois, quatre ou cinq composés de transfert de chaleur.

Des compositions préférées de fluide frigorigène F selon l'invention comprennent, ou de préférence sont constituées (des), les mélanges suivants :

| | |
|---|---|
| HFO-1234yf | HFC-152a |
| HFO-1234ze | HFC-152a |

Des compositions préférées de fluide frigorigène F selon l'invention comprennent, ou de préférence sont constituées (des), les mélanges suivants :

| | | |
|---|---|---|
| HFO-1234yf | HFC-152a | HFC-125 |
| HFO-1234yf | HFC-152a | HFC-32 |
| HFO-1234yf | HFC-134a | HFC-152a |
| HFO-1234ze | HFC-134a | HFC-152a |
| HFO-1234ze | HFC-152a | HFC-32 |
| HFO-1234ze | HFC-152a | HFC-125 |
| HFO-1234yf | HFO-1234ze | HFC-152a |

Des compositions préférées de fluide frigorigène F selon l'invention comprennent, ou de préférence sont constituées (des), les mélanges suivants :

| | | | |
|---|---|---|---|
| HFO-1234yf | HFC-134a | HFC-152a | HFC-32 |
| HFO-1234yf | HFC-134a | HFC-152a | HFC-125 |
| HFO-1234yf | HFO-1234ze | HFC-134a | HFC-152a |
| HFO-1234ze | HFC-134a | HFC-152a | HFC-32 |
| HFO-1234ze | HFC-134a | HFC-152a | HFC-125 |

D'autres compositions préférées de fluide frigorigène F selon l'invention comprennent, ou de préférence sont constituées (des), les mélanges suivants :

| | | | | |
|---|---|---|---|---|
| HFO-1234yf | HFC-134a | HFC-152a | HFC-125 | HFC-32 |
| HFO-1234ze | HFC-134a | HFC-152a | HFC-125 | HFC-32 |

Dans le fluide frigorigène F selon l'invention, la proportion massique de tétrafluoropropène(s), et notamment de HFO-1234yf et/ou HFO-1234ze, peut représenter par exemple de 1 à 5 % du fluide; ou de 5 à 10 % du fluide; ou de 10 à 15 % du fluide; ou de 15 à 20 % du fluide; ou de 20 à 25 % du fluide; ou de 25 à 30 % du fluide; ou de 30 à 35 % du fluide; ou de 35 à 40 % du fluide; ou de 40 à 45 % du fluide; ou de 45 à 50 % du fluide; ou de 50 à 55 % du fluide; ou de 55 à 60 % du fluide; ou de 60 à 65 % du fluide; ou de 65 à 70 % du fluide ; ou de 70 à 75 % du fluide; ou de 75 à 80 % du fluide; ou de 80 à 85 % du fluide; ou de 85 à 90 % du fluide; ou de 90 à 95 % du fluide; ou de 95 à 99 % du fluide; ou de 99 à 99,5 % du fluide; ou de 99,5 à 99,9 % du fluide; ou plus de 99,9 % du fluide, par rapport à la masse totale dudit fluide. La teneur en tétrafluoropropène, et notamment de HFO-1234yf et/ou HFO-1234ze, dans le fluide frigorigène F peut également varier dans plusieurs des intervalles ci-dessus : par exemple de 50 à 55 % et de 55 à 60 %, c'est-à-dire de 50 à 60 %, etc.

Selon un mode de réalisation préféré, la proportion massique de tétrafluoropropène(s), et notamment de HFO-1234yf et/ou HFO-1234ze, dans le fluide frigorigène F est supérieure à 70%, de préférence comprise entre 70% et 95%, préférentiellement entre 75% et 90%, et en particulier entre 75% et 78%.

Dans le fluide frigorigène selon l'invention, la proportion massique d'hydrofluorocarbure(s) peut représenter notamment de 1 à 5 % du fluide; ou de 5 à 10 % du fluide; ou de 10 à 15 % du fluide; ou de 15 à 20 % du fluide; ou de 20 à 25 % du fluide; ou de 25 à 30 % du fluide; ou de 30 à 35 % du fluide; ou de 35 à 40 % du fluide; ou de 40 à 45 % du fluide; ou de 45 à 50 % du fluide; ou de 50 à 55 % du fluide; ou de 55 à 60 % du fluide; ou de 60 à 65 % du fluide; ou de 65 à 70 % du fluide ; ou de 70 à 75 % du fluide; ou de 75 à 80 % du fluide; ou de 80 à 85 % du fluide; ou de 85 à 90 % du fluide; ou de 90 à 95 % du fluide; ou de 95 à 99 % du fluide; ou de 99 à 99,5 % du fluide; ou de 99,5 à 99,9 % du fluide, par rapport à la masse totale dudit fluide. La teneur en hydrofluorocarbure(s) dans le fluide frigorigène F peut également varier dans plusieurs des intervalles ci-dessus : par exemple de 50 à 55 % et de 55 à 60 %, c'est-à-dire de 50 à 60 %, etc.

Selon un mode de réalisation préféré, la proportion massique d'hydrofluorocarbure(s), dans le fluide frigorigène F est inférieure à 70%, de préférence inférieure à 50%, préférentiellement va de 10% à 30%, et en particulier de 18% à 27%, par rapport à la masse totale dudit fluide.

Des compositions préférées de fluide frigorigène F sont les suivantes :

| | | | | | Gammes de concentration (proportion massique en %) | | |
|---|---|---|---|---|---|---|---|
| V | W | X | Y | Z | Préférées (V/W/X/Y/Z) | Encore plus préférées (V/W/X/Y/Z) | Les plus préférées (V/W/X/Y/Z) |
| HFO-1234yf | HFC-152a | | | | 10-95/5-90 | 50-95/5-50 | 80-95/5-20 |
| HFO-1234ze | HFC-152a | | | | 10-95/5-90 | 35-95/5-65 | 45-95/5-55 |
| HFO-1234yf | HFC-134a | HFC-152a | | | 1-98/1-98/1-98 | 50-98/1-49/1-49 | 56-80/5-22/5-22 |

(suite)

| | | | | | Gammes de concentration (proportion massique en %) | | |
|---|---|---|---|---|---|---|---|
| V | W | X | Y | Z | Préférées (V/W/X/Y/Z) | Encore plus préférées (V/W/X/Y/Z) | Les plus préférées (V/W/X/Y/Z) |
| HFO-1234ze | HFC-134a | HFC-152a | | | 1-98/1-98/1-98 | 50-98/1-49/1-49 | 56-80/5-22/5-22 |

Les fluides frigorigènes F préférés sont ceux comprenant les mélanges susmentionnés dans les teneurs mentionnées dans le tableau ci-dessus.

Selon un mode de réalisation, les compositions de fluide frigorigène préférées sont les suivantes :

- HFO-1234yf et HFC-152a et HFC-134a.

Selon un mode de réalisation, les fluides frigorigènes préférés comprennent les mélanges suivants :

- HFO-1234yf et HFC-152a et HFC-134a.

Selon un mode de réalisation préféré, le fluide frigorigène F est celui comprenant (de préférence constitué): de 75,5 à 79,5% en poids de HFO-1234yf, de 12 à 16 % en poids de HFC-152a, et de 6,5 à 10,5% en poids de HFC-134a. En particulier, le fluide frigorigène F comprend (de préférence est constitué de) 77,5% en poids de HFO-1234yf, 14% en poids de HFC-152a et 8,5% en poids de HFC-134a, par rapport au poids total dudit fluide F.

Selon un mode de réalisation préféré, le fluide frigorigène F est celui comprenant (de préférence constitué) de 74 à 81,5 en poids de HFO-1234yf, de 6,5 à 10,5 en poids de HFC-134a, et de 12 à 16 % en poids de HFC-152a, par rapport au poids total dudit fluide F.

Un mélange azéotropique ou quazi-azéotropique peut être identifié à partir des pressions de saturations liquide et vapeur,à une température donnée.

Dans le cadre de l'invention, on entend par « pression de saturation vapeur » ou encore « Psat vap », la pression à laquelle la première goutte de liquide commence à se former dans un fluide à l'état vapeur. Cette pression est aussi appelée pression de Rosée.

Dans le cadre de l'invention, on entend par « pression de saturation liquide » ou encore « Psat liq », la pression à laquelle la première bulle de vapeur commence à se former dans un fluide à l'état liquide. Cette pression est aussi appelée pression de bulle.

Dans le cadre de l'invention, le pourcentage $R_P$, calculé à partir des pressions de saturations vapeur et liquide, répond à l'équation suivante :

$$Rp = \left[\frac{(Psat\ liq - Psat\ vap)}{Psat\ liq}\right] \times 100$$

Dans le cadre de l'invention, un mélange est azéotropique lorsque le pourcentage $R_P$ défini ci-dessus est compris entre 0 et 0,5%.

Dans le cadre de l'invention, par « comprise entre x et y », on entend un intervalle dans lequel les bornes x et y sont incluses. Par exemple, la gamme «comprise entre 0 et 0,50% » inclus notamment les valeurs 0 et 0,5%.

Dans le cadre de l'invention, un mélange est quasi-azéotropique, lorsque le pourcentage $R_P$ défini ci-dessus est strictement supérieur à 0,5% et strictement inférieur à 10,0%.

A titre d'exemple et suivant la norme ASHRAE STANDARD 34-2013 « Désignation and safety classification of refrigerents », les mélanges du tableau ci-dessous sont classifiés comme azéotropes, suivant cette norme (les composants, compositions et températures sont indiqué par la même norme, et les pressions sont calculées par Refrop 9 ( Reference fluid Properties) : Logiciel développé par NIST (National Institute of Standards and Technology) pour le calcul des propriétés des fluides frigorigènes) :

| Produit | Composants | % massique | Température (°C) | Psat Liq (bar abs) (± 0,5%) | Psat vap (bar abs) (± 0,5%) | Rp (valeur arrondie au dixième) |
|---|---|---|---|---|---|---|
| R500 | R12/R152a | 73.8/26.2 | 0,0 | 3,643 | 3,638 | 0,1 |

(suite)

| Produit | Composants | % massique | Température (°C) | Psat Liq (bar abs) (± 0,5%) | Psat vap (bar abs) (± 0,5%) | Rp (valeur arrondie au dixième) |
|---|---|---|---|---|---|---|
| R501 | R22/R12 | 75/25 | -41,0 | 0,996 | 0,992 | 0,4 |
| R502 | R22/R115 | 48.8/51.2 | 19,0 | 9,803 | 9,800 | 0,0 |
| R504 | R32/R115 | 48.2/51.8 | 17,0 | 15,240 | 15,229 | 0,1 |
| R507A | R125/R143a | 50/50 | -40,0 | 1,386 | 1,386 | 0,0 |
| R508A | R23/R116 | 39/61 | -86,0 | 1,111 | 1,111 | 0,0 |
| R512A | R134a/R152a | 5/95 | 10,0 | 3,728 | 3,728 | 0,0 |

Ce tableau décrit notamment des réfrigérants classés azéotropiques montrant une différence relative des pressions de saturation inférieur à 0,5%.

Parmi les fluides frigorigènes F selon l'invention, certains présentent l'avantage d'être azéotropiques ou quasi-azéotropiques. On peut notamment citer les mélanges suivants :

| | | Température (°C) | Psat Liq (bar abs) (± 0,5%) | Psat vap (bar abs) (± 0,5%) | Rp (valeur arrondie au dixième) | type |
|---|---|---|---|---|---|---|
| R1234yf | R134a | | | | | |
| 60,0 | 40,0 | 30,00 | 8,208 | 8,208 | 0,0 | azéotrope |
| 56,0 | 44,0 | 30,00 | 8,211 | 8,211 | 0,0 | azéotrope |
| 50,0 | 50,0 | 30,00 | 8,205 | 8,204 | 0,0 | azéotrope |
| 45,0 | 55,0 | 30,00 | 8,191 | 8,187 | 0,0 | azéotrope |
| 40,0 | 60,0 | 30,00 | 8,169 | 8,161 | 0,1 | azéotrope |
| R1234ze | R134a | | | | | |
| 58 | 42,0 | 30,00 | 6,830 | 6,705 | 1,8 | quazi-azéotrope |
| 50 | 50,0 | 30,00 | 6,983 | 6,870 | 1,6 | quazi-azéotrope |
| 45 | 55,0 | 30,00 | 7,072 | 6,969 | 1,5 | quazi-azéotrope |
| 40 | 60,0 | 30,00 | 7,157 | 7,066 | 1,3 | quazi-azéotrope |
| R1234yf | R152a | | | | | |
| 95,0 | 5,0 | -20,00 | 1,512 | 1,512 | 0,0 | azéotrope |
| 90,0 | 10,0 | 5,00 | 3,748 | 3,748 | 0,0 | azéotrope |
| 85,0 | 15,0 | 25,00 | 6,882 | 6,882 | 0,0 | azéotrope |
| 80,0 | 20,0 | 30,00 | 7,902 | 7,902 | 0,0 | azéotrope |
| R1234ze | R152a | | | | | |
| 95 | 5,0 | 30,00 | 5,998 | 5,947 | 0,9 | quazi-azéotrope |
| 90 | 10,0 | 30,00 | 6,172 | 6,097 | 1,2 | quazi-azéotrope |

(suite)

| | | | | | | |
|---|---|---|---|---|---|---|
| R1234ze | R152a | | | | | |
| 85 | 15,0 | 30,00 | 6,314 | 6,232 | 1,3 | quazi-azéotrope |
| 80 | 20,0 | 30,00 | 6,431 | 6,352 | 1,2 | quazi-azéotrope |
| 75 | 25,0 | 30,00 | 6,528 | 6,458 | 1,1 | quazi-azéotrope |

| | | | Température (°C) | Psat Liq (bar abs) (± 0,5%) | Psat vap (bar abs) (± 0,5%) | Rp (valeur arrondie au dixième) | type |
|---|---|---|---|---|---|---|---|
| R1234yf | R134a | R152a | | | | | |
| 81,5 | 8,5 | 10,0 | 30,00 | 7,972 | 7,968 | 0,1 | azéotrope |
| 77,5 | 8,5 | 14,0 | 26,97 | 7,319 | 7,316 | 0,0 | azéotrope |
| 76,5 | 8,5 | 15,0 | 30,00 | 7,955 | 7,952 | 0,0 | azéotrope |
| 71,5 | 8,5 | 20,0 | 30,00 | 7,928 | 7,923 | 0,1 | azéotrope |
| 66,5 | 8,5 | 25,0 | 30,00 | 7,894 | 7,883 | 0,1 | azéotrope |
| R134a | R152a | R1234ze | | | | | |
| 2,0 | 10,0 | 88,0 | 30,00 | 6,216 | 6,136 | 1,3 | quazi-azéotrope |
| 5,0 | 10,0 | 85,0 | 30,00 | 6,280 | 6,195 | 1,4 | quazi-azéotrope |
| 8,5 | 10,0 | 81,5 | 30,00 | 6,353 | 6,263 | 1,4 | quazi-azéotrope |
| 2,0 | 15,0 | 83,0 | 30,00 | 6,352 | 6,268 | 1,3 | quazi-azéotrope |
| 5,0 | 15,0 | 80,0 | 30,00 | 6,407 | 6,323 | 1,3 | quazi-azéotrope |
| 8,5 | 15,0 | 76,5 | 30,00 | 6,470 | 6,385 | 1,3 | quazi-azéotrope |
| 2,0 | 20,0 | 78,0 | 30,00 | 6,464 | 6,385 | 1,2 | quazi-azéotrope |
| 5,0 | 20,0 | 75,0 | 30,00 | 6,511 | 6,435 | 1,2 | quazi-azéotrope |
| 8,5 | 20,0 | 71,5 | 30,00 | 6,565 | 6,492 | 1,1 | quazi-azéotrope |

Selon un mode de réalisation préféré, les fluides frigorigènes F comprenant (de préférence constitué) de 74 à 81,5% en poids de HFO-1324yf, de 6,5 à 10,5% en poids de HFC-134a, et de 12 à 16% en poids de HFC-152a, par rapport au poids total de la composition, sont des compositions azéotropiques à une température comprise entre - 40,00 et 70,00°C, et à une pression comprise entre 0,5 et 21,0 bar abs (± 0,5%).

Selon un mode de réalisation préféré, les fluides frigorigènes F comprenant (de préférence constitué) de 75,5% à 79,5% en poids de HFO-1324yf, de 6,5 à 10,5% en poids de HFC-134a, et de 12 à 16% en poids de HFC-152a, par rapport au poids total de la composition, sont des compositions azéotropiques à une température comprise entre -40,00 et 70,00°C, et à une pression comprise entre 0,5 et 21,0 bar abs (± 0,5%).

Des fluides frigorigènes F préférés, sont les compositions azéotropiques suivantes :

| R1234yf | R134a | R152a | Température (°C) | Psat Liq (bar abs) (± 0,5%) | Psat vap (bar abs) (± 0,5%) | Rp (valeur arrondie au dixième) |
|---|---|---|---|---|---|---|
| 77,5 | 8,5 | 14,0 | -40,00 | 0,616 | 0,614 | 0,3 |
| 77,5 | 8,5 | 14,0 | -35,00 | 0,783 | 0,781 | 0,3 |
| 77,5 | 8,5 | 14,0 | -30,00 | 0,984 | 0,982 | 0,2 |
| 77,5 | 8,5 | 14,0 | -25,00 | 1,224 | 1,221 | 0,2 |
| 77,5 | 8,5 | 14,0 | -20,00 | 1,507 | 1,504 | 0,2 |
| 77,5 | 8,5 | 14,0 | -15,00 | 1,838 | 1,835 | 0,2 |
| 77,5 | 8,5 | 14,0 | -10,00 | 2,223 | 2,221 | 0,1 |
| 77,5 | 8,5 | 14,0 | -5,00 | 2,668 | 2,665 | 0,1 |
| 77,5 | 8,5 | 14,0 | 0,00 | 3,178 | 3,176 | 0,1 |
| 77,5 | 8,5 | 14,0 | 5,00 | 3,759 | 3,757 | 0,1 |
| 77,5 | 8,5 | 14,0 | 10,00 | 4,418 | 4,416 | 0,0 |
| 77,5 | 8,5 | 14,0 | 15,00 | 5,161 | 5,158 | 0,1 |
| 77,5 | 8,5 | 14,0 | 20,00 | 5,994 | 5,991 | 0,1 |
| 77,5 | 8,5 | 14,0 | 25,00 | 6,924 | 6,921 | 0,0 |
| 77,5 | 8,5 | 14,0 | 26,97 | 7,319 | 7,316 | 0,0 |
| 77,5 | 8,5 | 14,0 | 30,00 | 7,959 | 7,956 | 0,0 |
| 77,5 | 8,5 | 14,0 | 35,00 | 9,106 | 9,102 | 0,0 |
| 77,5 | 8,5 | 14,0 | 40,00 | 10,371 | 10,367 | 0,0 |
| 77,5 | 8,5 | 14,0 | 45,00 | 11,765 | 11,760 | 0,0 |
| 77,5 | 8,5 | 14,0 | 50,00 | 13,293 | 13,288 | 0,0 |
| 77,5 | 8,5 | 14,0 | 55,00 | 14,966 | 14,960 | 0,0 |
| 77,5 | 8,5 | 14,0 | 60,00 | 16,793 | 16,786 | 0,0 |
| 77,5 | 8,5 | 14,0 | 65,00 | 18,783 | 18,775 | 0,0 |
| 77,5 | 8,5 | 14,0 | 70,00 | 20,948 | 20,938 | 0,0 |

Des fluides frigorigènes F préférés, sont les compositions azéotropiques suivantes :

| R1234yf | R134a | R152a | Température (°C) | Psat Liq (bar abs) (± 0,5%) | Psat vap (bar abs) (± 0,5%) | Rp (valeur arrondie au dixième) |
|---|---|---|---|---|---|---|
| 77,5 | 6,5 | 16,0 | -40,00 | 0,615 | 0,613 | 0,3 |
| 77,5 | 6,5 | 16,0 | -35,00 | 0,782 | 0,779 | 0,4 |
| 77,5 | 6,5 | 16,0 | -30,00 | 0,982 | 0,979 | 0,3 |
| 77,5 | 6,5 | 16,0 | -25,00 | 1,221 | 1,218 | 0,2 |
| 77,5 | 6,5 | 16,0 | -20,00 | 1,504 | 1,501 | 0,2 |
| 77,5 | 6,5 | 16,0 | -15,00 | 1,834 | 1,831 | 0,2 |
| 77,5 | 6,5 | 16,0 | -10,00 | 2,219 | 2,216 | 0,1 |
| 77,5 | 6,5 | 16,0 | -5,00 | 2,663 | 2,660 | 0,1 |
| 77,5 | 6,5 | 16,0 | 0,00 | 3,172 | 3,169 | 0,1 |

(suite)

| R1234yf | R134a | R152a | Température (°C) | Psat Liq (bar abs) (± 0,5%) | Psat vap (bar abs) (± 0,5%) | Rp (valeur arrondie au dixième) |
|---|---|---|---|---|---|---|
| 77,5 | 6,5 | 16,0 | 5,00 | 3,752 | 3,749 | 0,1 |
| 77,5 | 6,5 | 16,0 | 10,00 | 4,409 | 4,406 | 0,1 |
| 77,5 | 6,5 | 16,0 | 15,00 | 5,150 | 5,147 | 0,1 |
| 77,5 | 6,5 | 16,0 | 20,00 | 5,981 | 5,979 | 0,0 |
| 77,5 | 6,5 | 16,0 | 25,00 | 6,910 | 6,907 | 0,0 |
| 77,5 | 6,5 | 16,0 | 26,97 | 7,304 | 7,301 | 0,0 |
| 77,5 | 6,5 | 16,0 | 30,00 | 7,942 | 7,939 | 0,0 |
| 77,5 | 6,5 | 16,0 | 35,00 | 9,086 | 9,083 | 0,0 |
| 77,5 | 6,5 | 16,0 | 40,00 | 10,349 | 10,346 | 0,0 |
| 77,5 | 6,5 | 16,0 | 45,00 | 11,740 | 11,736 | 0,0 |
| 77,5 | 6,5 | 16,0 | 50,00 | 13,265 | 13,261 | 0,0 |
| 77,5 | 6,5 | 16,0 | 55,00 | 14,935 | 14,930 | 0,0 |
| 77,5 | 6,5 | 16,0 | 60,00 | 16,757 | 16,752 | 0,0 |
| 77,5 | 6,5 | 16,0 | 65,00 | 18,743 | 18,737 | 0,0 |
| 77,5 | 6,5 | 16,0 | 70,00 | 20,903 | 20,897 | 0,0 |

Des fluides frigorigènes F préférés, sont les compositions azéotropiques suivantes :

| R1234yf | R134a | R152a | Température (°C) | Psat Liq (bar abs) (± 0,5%) | Psat vap (bar abs) (± 0,5%) | Rp (valeur arrondie au dixième) |
|---|---|---|---|---|---|---|
| 81,5 | 6,5 | 12,0 | -40,00 | 0,619 | 0,618 | 0,2 |
| 81,5 | 6,5 | 12,0 | -35,00 | 0,787 | 0,785 | 0,3 |
| 81,5 | 6,5 | 12,0 | -30,00 | 0,988 | 0,986 | 0,2 |
| 81,5 | 6,5 | 12,0 | -25,00 | 1,228 | 1,226 | 0,2 |
| 81,5 | 6,5 | 12,0 | -20,00 | 1,511 | 1,509 | 0,1 |
| 81,5 | 6,5 | 12,0 | -15,00 | 1,842 | 1,841 | 0,1 |
| 81,5 | 6,5 | 12,0 | -10,00 | 2,228 | 2,226 | 0,1 |
| 81,5 | 6,5 | 12,0 | -5,00 | 2,672 | 2,671 | 0,0 |
| 81,5 | 6,5 | 12,0 | 0,00 | 3,182 | 3,181 | 0,0 |
| 81,5 | 6,5 | 12,0 | 5,00 | 3,763 | 3,761 | 0,1 |
| 81,5 | 6,5 | 12,0 | 10,00 | 4,420 | 4,419 | 0,0 |
| 81,5 | 6,5 | 12,0 | 15,00 | 5,162 | 5,160 | 0,0 |
| 81,5 | 6,5 | 12,0 | 20,00 | 5,993 | 5,991 | 0,0 |
| 81,5 | 6,5 | 12,0 | 25,00 | 6,922 | 6,919 | 0,0 |
| 81,5 | 6,5 | 12,0 | 26,97 | 7,316 | 7,313 | 0,0 |
| 81,5 | 6,5 | 12,0 | 30,00 | 7,954 | 7,951 | 0,0 |
| 81,5 | 6,5 | 12,0 | 35,00 | 9,097 | 9,094 | 0,0 |
| 81,5 | 6,5 | 12,0 | 40,00 | 10,359 | 10,355 | 0,0 |

(suite)

| R1234 yf | R134a | R152a | Température (°C) | Psat Liq (bar abs) (± 0,5%) | Psat vap (bar abs) (± 0,5%) | Rp (valeur arrondie au dixième) |
|---|---|---|---|---|---|---|
| 81,5 | 6,5 | 12,0 | 45,00 | 11,748 | 11,743 | 0,0 |
| 81,5 | 6,5 | 12,0 | 50,00 | 13,272 | 13,266 | 0,0 |
| 81,5 | 6,5 | 12,0 | 55,00 | 14,939 | 14,932 | 0,0 |
| 81,5 | 6,5 | 12,0 | 60,00 | 16,759 | 16,751 | 0,0 |
| 81,5 | 6,5 | 12,0 | 65,00 | 18,742 | 18,732 | 0,1 |
| 81,5 | 6,5 | 12,0 | 70,00 | 20,898 | 20,887 | 0,1 |

Des fluides frigorigènes F préférés, sont les compositions azéotropiques suivantes :

| R1234yf | R134a | R152a | Température (°C) | Psat Liq (bar abs) (± 0,5%) | Psat vap (bar abs) (± 0,5%) | Rp (valeur arrondie au dixième) |
|---|---|---|---|---|---|---|
| 75,5 | 10,0 | 14,5 | -40,00 | 0,615 | 0,612 | 0,5 |
| 75,5 | 10,0 | 14,5 | -35,00 | 0,782 | 0,778 | 0,5 |
| 75,5 | 10,0 | 14,5 | -30,00 | 0,983 | 0,979 | 0,4 |
| 75,5 | 10,0 | 14,5 | -25,00 | 1,222 | 1,218 | 0,3 |
| 75,5 | 10,0 | 14,5 | -20,00 | 1,505 | 1,501 | 0,3 |
| 75,5 | 10,0 | 14,5 | -15,00 | 1,836 | 1,833 | 0,2 |
| 75,5 | 10,0 | 14,5 | -10,00 | 2,222 | 2,218 | 0,2 |
| 75,5 | 10,0 | 14,5 | -5,00 | 2,667 | 2,663 | 0,1 |
| 75,5 | 10,0 | 14,5 | 0,00 | 3,177 | 3,173 | 0,1 |
| 75,5 | 10,0 | 14,5 | 5,00 | 3,759 | 3,755 | 0,1 |
| 75,5 | 10,0 | 14,5 | 10,00 | 4,418 | 4,415 | 0,1 |
| 75,5 | 10,0 | 14,5 | 15,00 | 5,161 | 5,158 | 0,1 |
| 75,5 | 10,0 | 14,5 | 20,00 | 5,995 | 5,992 | 0,1 |
| 75,5 | 10,0 | 14,5 | 25,00 | 6,927 | 6,923 | 0,1 |
| 75,5 | 10,0 | 14,5 | 26,97 | 7,323 | 7,319 | 0,1 |
| 75,5 | 10,0 | 14,5 | 30,00 | 7,963 | 7,960 | 0,0 |
| 75,5 | 10,0 | 14,5 | 35,00 | 9,112 | 9,108 | 0,0 |
| 75,5 | 10,0 | 14,5 | 40,00 | 10,380 | 10,375 | 0,0 |
| 75,5 | 10,0 | 14,5 | 45,00 | 11,775 | 11,770 | 0,0 |
| 75,5 | 10,0 | 14,5 | 50,00 | 13,307 | 13,301 | 0,0 |
| 75,5 | 10,0 | 14,5 | 55,00 | 14,983 | 14,977 | 0,0 |
| 75,5 | 10,0 | 14,5 | 60,00 | 16,814 | 16,806 | 0,0 |
| 75,5 | 10,0 | 14,5 | 65,00 | 18,808 | 18,800 | 0,0 |
| 75,5 | 10,0 | 14,5 | 70,00 | 20,978 | 20,968 | 0,0 |

Des fluides frigorigènes F préférés, sont les compositions azéotropiques suivantes :

| R1234yf | R134a | R152a | Température (°C) | Psat Liq (bar abs) (± 0,5%) | Psat vap (bar abs) (± 0,5%) | Rp (valeur arrondie au dixième) |
|---|---|---|---|---|---|---|
| 77,5 | 10,5 | 12,0 | -40,00 | 0,618 | 0,615 | 0,5 |
| 77,5 | 10,5 | 12,0 | -35,00 | 0,785 | 0,783 | 0,3 |
| 77,5 | 10,5 | 12,0 | -30,00 | 0,987 | 0,984 | 0,3 |
| 77,5 | 10,5 | 12,0 | -25,00 | 1,227 | 1,224 | 0,2 |
| 77,5 | 10,5 | 12,0 | -20,00 | 1,510 | 1,508 | 0,1 |
| 77,5 | 10,5 | 12,0 | -15,00 | 1,842 | 1,840 | 0,1 |
| 77,5 | 10,5 | 12,0 | -10,00 | 2,229 | 2,226 | 0,1 |
| 77,5 | 10,5 | 12,0 | -5,00 | 2,674 | 2,672 | 0,1 |
| 77,5 | 10,5 | 12,0 | 0,00 | 3,186 | 3,183 | 0,1 |
| 77,5 | 10,5 | 12,0 | 5,00 | 3,768 | 3,766 | 0,1 |
| 77,5 | 10,5 | 12,0 | 10,00 | 4,429 | 4,426 | 0,1 |
| 77,5 | 10,5 | 12,0 | 15,00 | 5,173 | 5,170 | 0,1 |
| 77,5 | 10,5 | 12,0 | 20,00 | 6,008 | 6,005 | 0,0 |
| 77,5 | 10,5 | 12,0 | 25,00 | 6,940 | 6,937 | 0,0 |
| 77,5 | 10,5 | 12,0 | 26,97 | 7,336 | 7,332 | 0,1 |
| 77,5 | 10,5 | 12,0 | 30,00 | 7,978 | 7,974 | 0,1 |
| 77,5 | 10,5 | 12,0 | 35,00 | 9,127 | 9,122 | 0,1 |
| 77,5 | 10,5 | 12,0 | 40,00 | 10,395 | 10,390 | 0,0 |
| 77,5 | 10,5 | 12,0 | 45,00 | 11,791 | 11,785 | 0,1 |
| 77,5 | 10,5 | 12,0 | 50,00 | 13,324 | 13,316 | 0,1 |
| 77,5 | 10,5 | 12,0 | 55,00 | 15,000 | 14,992 | 0,1 |
| 77,5 | 10,5 | 12,0 | 60,00 | 16,831 | 16,821 | 0,1 |
| 77,5 | 10,5 | 12,0 | 65,00 | 18,826 | 18,815 | 0,1 |
| 77,5 | 10,5 | 12,0 | 70,00 | 20,996 | 20,983 | 0,1 |

Selon un mode de réalisation préféré, la composition azéotropique selon l'invention comprend (de préférence est constituée de) 77,5% (± 0,2%) en poids de HFO-1234yf, 14% (± 0,2%) en poids de HFC-152a et 8,5% (± 0,2%) en poids de HFC-134a, par rapport au poids total de la composition, ladite composition ayant une température d'ébullition comprise entre -40,00°C et 70,00°C, à une pression comprise entre 0,5 et 21,0 bar abs (± 0,5%).

Selon un mode de réalisation préféré, la composition azéotropique selon l'invention comprend (de préférence est constituée de) 77,5% (± 0,2%) en poids de HFO-1234yf, 14% (± 0,2%) en poids de HFC-152a et 8,5% (± 0,2%) en poids de HFC-134a, par rapport au poids total de la composition, ladite composition ayant une température d'ébullition de 26,97°C (± 0,50°C) à la pression de 7,3 bar abs (± 0,5%).

Selon un mode de réalisation préféré, la composition azéotropique selon l'invention comprend (de préférence est constituée de) 77,5% en poids de HFO-1234yf, 16% en poids de HFC-152a et 6,5% en poids de HFC-134a, par rapport au poids total de la composition, ladite composition ayant une température d'ébullition comprise entre -40,00°C et 70,00°C, à une pression comprise entre 0,5 et 21,0 bar abs (± 0,5%), et de préférence entre 0,6 et 20,9 bars abs (± 0,5%).

Selon un mode de réalisation préféré, la composition azéotropique selon l'invention comprend (de préférence est constituée de) 77,5% en poids de HFO-1234yf, 16% en poids de HFC-152a et 6,5% en poids de HFC-134a, par rapport au poids total de la composition, ladite composition ayant une température d'ébullition de 26,97°C (± 0,50°C) à la pression de 7,3 bar abs (± 0,5%).

Selon un mode de réalisation préféré, la composition azéotropique selon l'invention comprend (de préférence

est constituée de) 77,5% (± 0,2%) en poids de HFO-1234yf, 15,8% (± 0,2%) en poids de HFC-152a et 6,7% (± 0,2%) en poids de HFC-134a, par rapport au poids total de la composition, ladite composition ayant une température d'ébullition comprise entre -40,00°C et 70,00°C, à une pression comprise entre 0,5 et 21,0 bar abs (± 0,5%), et de préférence entre 0,6 et 20,9 bars abs (± 0,5%).

Selon un mode de réalisation préféré, la composition azéotropique selon l'invention comprend (de préférence est constituée de) 77,5% (± 0,2%) en poids de HFO-1234yf, 15,8% (± 0,2%) en poids de HFC-152a et 6,7% (± 0,2%) en poids de HFC-134a, par rapport au poids total de la composition, ladite composition ayant une température d'ébullition de 26,97°C (± 0,50°C) à la pression de 7,3 bar abs (± 0,5%).

Selon un mode de réalisation préféré, la composition azéotropique selon l'invention comprend (de préférence est constituée de) 81,5% (± 0,2%) en poids de HFO-1234yf, 12% (± 0,2%) en poids de HFC-152a et 6,5% (± 0,2%) en poids de HFC-134a, par rapport au poids total de la composition, ladite composition ayant une température d'ébullition comprise entre -40,00°C et 70,00°C, à une pression comprise entre 0,5 et 21,0 bar abs (± 0,5%), et de préférence entre 0,6 et 20,9 bars abs (± 0,5%).

Selon un mode de réalisation préféré, la composition azéotropique selon l'invention comprend (de préférence est constituée de) 81,5% (± 0,2%) en poids de HFO-1234yf, 12% (± 0,2%) en poids de HFC-152a et 6,5% (± 0,2%) en poids de HFC-134a, par rapport au poids total de la composition, ladite composition ayant une température d'ébullition de 26,97°C (± 0,50°C) à la pression de 7,3 bar abs (± 0,5%).

Selon un mode de réalisation préféré, la composition azéotropique selon l'invention comprend (de préférence est constituée de) 75,5% (± 0,2%) en poids de HFO-1234yf, 14,5% (± 0,2%) en poids de HFC-152a et 10% (± 0,2%) en poids de HFC-134a, par rapport au poids total de la composition, ladite composition ayant une température d'ébullition comprise entre -40,00°C et 70,00°C, à une pression comprise entre 0,5 et 21,0 bar abs (± 0,5%), et de préférence entre 0,78 et 20,98 bars abs (± 0,5%).

Selon un mode de réalisation préféré, la composition azéotropique selon l'invention comprend (de préférence est constituée de) 75,5% (± 0,2%) en poids de HFO-1234yf, 14,5% (± 0,2%) en poids de HFC-152a et 10% (± 0,2%) en poids de HFC-134a, par rapport au poids total de la composition, ladite composition ayant une température d'ébullition de 26,97°C (± 0,50°C) à la pression de 7,3 bar abs (± 0,5%).

Selon un mode de réalisation préféré, la composition azéotropique selon l'invention comprend (de préférence est constituée de) 77,5% (± 0,2%) en poids de HFO-1234yf, 12% (± 0,2%) en poids de HFC-152a et 10,5% (± 0,2%) en poids de HFC-134a, par rapport au poids total de la composition, ladite composition ayant une température d'ébullition comprise entre -40,00°C et 70,00°C, à une pression comprise entre 0,5 et 21,0 bar abs (± 0,5%), et de préférence entre 0,61 et 21,00 bars abs(± 0,5%).

Selon un mode de réalisation préféré, la composition azéotropique selon l'invention comprend (de préférence est constituée de) 77,5% (± 0,2%) en poids de HFO-1234yf, 12% (± 0,2%) en poids de HFC-152a et 10,5% (± 0,2%) en poids de HFC-134a, par rapport au poids total de la composition, ladite composition ayant une température d'ébullition de 26,97°C (± 0,50°C) à la pression de 7,3 (± 0,5%).

Selon un mode de réalisation préféré, la composition azéotropique selon l'invention comprend (de préférence est constituée de) 77,5% (± 0,2%) en poids de HFO-1234yf, 12,2% (± 0,2%) en poids de HFC-152a et 10,3% (± 0,2%) en poids de HFC-134a, par rapport au poids total de la composition, ladite composition ayant une température d'ébullition comprise entre -40,00°C et 70,00°C, à une pression comprise entre 0,5 et 21,0 bar abs (± 0,5%), et de préférence entre 0,61 et 21,00 bars abs(± 0,5%).

Selon un mode de réalisation préféré, la composition azéotropique selon l'invention comprend (de préférence est constituée de) 77,5% (± 0,2%) en poids de HFO-1234yf, 12,2% (± 0,2%) en poids de HFC-152a et 10,3% (± 0,2%) en poids de HFC-134a, par rapport au poids total de la composition, ladite composition ayant une température d'ébullition de 26,97°C (± 0,50°C) à la pression de 7,3 (± 0,5%).

***Lubrifiant***

Dans le cadre de l'invention, on utilise manière équivalente les termes « lubrifiant », « huile lubrifiante » et « huile de lubrification ».

Selon l'invention, le lubrifiant peut comprendre un ou plusieurs esters de polyol.

Selon un mode de réalisation, les esters de polyol sont obtenus par réaction d'au moins un polyol, avec un acide carboxylique ou avec un mélange d'acides carboxyliques.

Dans le cadre de l'invention, et sauf mention contraire, on entend par « polyol », un composé contenant au moins deux groupements hydroxyles (-OH).

*Esters de polyol A)*

Selon un mode de réalisation, les esters de polyol selon l'invention répondent la formule suivante (I) suivante :

$R^1[OC(O)R^2]_n$ (I)

dans laquelle :

- $R^1$ est un radical hydrocarboné, linéaire ou ramifié, éventuellement substitué par au moins un groupement hydroxyle et/ou comprenant au moins un hétéroatome choisi dans le groupe constitué de -O-, -N-, et -S- ;
- chaque $R^2$ est, indépendamment les uns des autres, choisi dans le groupe constitué de :
    - i) H ;
    - ii) un radical hydrocarboné aliphatique ;
    - iii) un radical hydrocarboné ramifié ;
    - iv) un mélange d'un radical ii) et/ou iii), avec un radical hydrocarboné aliphatique comprenant de 8 à 14 atomes de carbone ; et
- n est un entier d'au moins 2.

Dans le cadre de l'invention, on entend par radical hydrocarboné, un radical composé d'atomes de carbone et d'hydrogène.

Selon un mode de réalisation, les polyols ont la formule générale (II) suivante :

$R^1(OH)_n$ (II)

dans laquelle :

- $R^1$ est un radical hydrocarboné, linéaire ou ramifié, éventuellement substitué par au moins un groupement hydroxyle, de préférence par deux groupements hydroxyle, et/ou comprenant au moins un hétéroatome choisi dans le groupe constitué de -O-, -N-, et -S- ; et
- n est un entier d'au moins 2.

De préférence, $R^1$ est un radical hydrocarboné, linéaire ou ramifié, comprenant de 4 à 40 atomes de carbone, de préférence de 4 à 20 atomes de carbone.

De préférence, $R^1$ est un radical hydrocarboné, linéaire ou ramifié, comprenant au moins un atome d'oxygène.

De préférence, $R^1$ est un radical hydrocarboné ramifié comprenant de 4 à 10 atomes de carbone, de préférence 5 atomes de carbone, substitué par deux groupements hydroxyle.

Selon un mode de réalisation préféré, les polyols comprennent de 2 à 10 groupements hydroxyle, de préférence de 2 à 6 groupements hydroxyle.

Les polyols selon l'invention peuvent comprendre un ou plusieurs groupes oxyalkylène, il s'agit dans ce cas particulier de polyétherpolyols.

Les polyols selon l'invention peuvent également comprendre un ou plusieurs atomes d'azote. Par exemple, les polyols peuvent être des alcanol amine contenant de 3 à 6 groupements OH. De préférence, les polyols sont des alcanol amine contenant au moins deux groupements OH, et de préférence au moins trois.

Selon la présente invention, les polyols préférés sont choisis dans le groupe constitué de l'éthylène glycol, du diéthylène glycol, du triéthylène glycol, du propylène glycol, du dipropylène glycol, du glycérol, du néopentyle glycol, du 1,2-butanediol, du 1,4-butanediol, du 1,3-butanediol, du pentaérythritol, du dipentaérythritol, du tripentaérythritol, du triglycérol, du triméthylolpropane, du sorbitol, de l'hexaglycérol, et de leurs mélanges.

Selon l'invention, les acides carboxyliques peuvent répondre à la formule générale (III) suivante :

$R^2COOH$ (III)

dans laquelle :

- $R^2$ est choisi dans le groupe constitué de :
    - i) H ;
    - ii) un radical hydrocarboné aliphatique ;
    - iii) un radical hydrocarboné ramifié ;
    - iv) un mélange d'un radical ii) et/ou iii), avec un radical hydrocarboné aliphatique comprenant de 8 à 14 atomes

de carbone.

De préférence, $R^2$ est un radical hydrocarboné aliphatique comprenant de 1 à 10, préférentiellement de 1 à 7 atomes de carbone, et en particulier de 1 à 6 atomes de carbone.

De préférence, $R^2$ est un radical hydrocarboné ramifié comprenant de 4 à 20 atomes de carbone, en particulier de 5 à 14 atomes de carbone, et préférentiellement de 6 à 8 atomes de carbone.

Selon un mode de réalisation préféré, un radical hydrocarboné ramifié a la formule (IV) suivante :

$$-C(R^3)R^4)(R^5) \qquad (IV)$$

dans laquelle $R^3$, $R^4$ et $R^5$ sont, indépendamment les uns des autres, un groupe alkyle, et au moins un des groupes alkyle contient au minimum deux atomes de carbone. De tels groupes alkyles ramifiés, une fois liés au groupe carboxyle sont connus sous la dénomination « groupe néo», et l'acide correspondant en tant que « acide néo ». De préférence, $R^3$ et $R^4$ sont des groupes méthyles et $R^{10}$ est un groupe alkyle comprenant au moins deux atomes de carbone.

Selon l'invention, le radical $R^2$ peut comprenant un ou plusieurs groupes carboxy, ou groupes ester tels que-$COOR^6$, avec $R^6$ représentant un radical alkyle, hydroxyalkyle ou un groupe hydroxyalkyloxy alkyle.

De préférence, l'acide $R^2COOH$ de formule (III) est un acide monocarboxylique.

Des exemples d'acides carboxyliques dans lesquels le radical hydrocarboné est aliphatique sont notamment: l'acide formique, l'acide acétique, l'acide propionique, l'acide butyrique, l'acide pentanoïque, l'acide hexanoïque et l'acide heptanoïque.

Des exemples d'acides carboxyliques dans lesquels le radical hydrocarboné est ramifié sont notamment : l'acide 2-éthyl-n-butyrique, l'acide 2-hexyldécanoïque, l'acide isostéarique, l'acide 2-méthyl-hexanoïque, l'acide 2-méthylbutanoïque, l'acide 3-méthylbutanoïque, le 3,5,5-triméthyl-hexanoïque, l'acide 2-éthylhexanoïque, l'acide néoheptanoïque, et l'acide néodécanoïque.

Le troisième type d'acides carboxyliques pouvant être utilisés dans la préparation des esters de polyols de formule (I) sont les acides carboxyliques comprenant un radical hydrocarboné aliphatique comprenant de 8 à 14 atomes de carbone. On peut par exemple citer : l'acide décanoïque, l'acide dodécanoïque, l'acide laurique, l'acide stéarique, l'acide myristique, l'acide béhénique,.. Parmi les acides dicarboxyliques, on peut citer l'acide maléïque, l'acide succinique, l'acide adipique, l'acide sébacique...

Selon un mode de réalisation préféré, les acides carboxyliques utilisés pour préparer les esters de polyols de formule (I) comprennent un mélange d'acides monocarboxyliques et dicarboxyliques, la proportion d'acides monocarboxyliques étant majoritaire. La présence d'acides dicarboxyliques résultent notamment dans la formation d'esters de polyol de viscosité élevée.

En particulier, la réaction de formation des esters de polyols de formule (I) par réaction entre l'acide carboxylique et les polyols est une réaction catalysée par un acide. Il s'agit notamment d'une réaction réversible, qui peut être complète par l'utilisation d'une large quantité d'acide ou par l'élimination de l'eau formée au cours de la réaction.

La réaction d'estérification peut être réalisée en présence d'acides organiques ou inorganiques, tels que l'acide sulfurique, l'acide phosphorique...

De préférence, la réaction est réalisée en l'absence de catalyseur.

La quantité d'acide carboxylique et de polyol peut varier dans le mélange selon les résultats désirés. Dans le cas particulier où tous les groupements hydroxyles sont estérifiés, une quantité suffisante d'acide carboxylique doit être ajoutée pour réagir avec tous les hydroxyles.

Selon un mode de réalisation, lors de l'utilisation de mélanges d'acides carboxyliques, ceux-ci peuvent réagir de manière séquentielle avec les polyols.

Selon un mode de réalisation préféré, lors de l'utilisation de mélange d'acides carboxyliques, un polyol réagit d'abord avec un acide carboxylique, typiquement l'acide carboxylique de poids moléculaire le plus élevé, suivie de la réaction avec l'acide carboxylique ayant une chaîne hydrocarbonée aliphatique.

Selon un mode de réalisation, les esters peuvent être formés par réaction entre les acides carboxyliques (ou leurs dérivés anhydrides ou esters) avec les polyols, en présence d'acides à température élevée, tout en enlevant l'eau formée au cours de la réaction. Typiquement, la réaction peut être réalisée à une température comprise de 75 à 200°C.

Selon un autre mode de réalisation, les esters de polyols formés peuvent comprendre des groupements hydroxyle n'ayant pas tous réagit, il s'agit dans ce cas d'esters de polyols partiellement estérifiés.

Selon un mode de réalisation préféré, les esters de polyol sont obtenus à partir de l'alcool pentaérythritol, et d'un mélange d'acides carboxyliques : l'acide isononanoïque, au moins un acide ayant un radical hydrocarboné aliphatique comprenant de 8 à 10 atomes de carbone, et l'acide heptanoïque. Les esters de polyol préférés sont obtenus à partir du pentaérythritol, et d'un mélange de 70% d'acide isononanoïque, de 15% d'au moins un acide carboxylique ayant un radical hydrocarboné aliphatique comprenant de 8 à 10 atomes de carbone, et 15% d'acide heptanoïque. On peut par exemple citer l'huile Solest 68 commercialisée par CPI Engineering Services Inc.

*Esters de polyol B)*

Selon un autre mode de réalisation, les esters de polyols de l'invention comprennent au moins un ester d'un ou plusieurs acides carboxyliques ramifiés comprenant au plus 8 atomes de carbone. L'ester est notamment obtenu par réaction dudit acide carboxylique ramifié avec un ou plusieurs polyols.
De préférence, l'acide carboxylique ramifié comprend au moins 5 atomes de carbone. En particulier, l'acide carboxylique ramifié comprend de 5 à 8 atomes de carbone, et préférentiellement il contient 5 atomes de carbone.
De préférence, l'acide carboxylique ramifié susmentionné ne comprend pas 9 atomes de carbone. En particulier, ledit acide carboxylique n'est pas l'acide 3,5,5-triméthylhexanoïque.
Selon un mode de réalisation préféré, l'acide carboxylique ramifié est choisi parmi l'acide 2-méthylbutanoïque, l'acide 3-méthylbutanoïque, et leurs mélanges.
Selon un mode de réalisation préféré, le polyol est choisi dans le groupe constitué du néopentyle glycol, du glycérol, du triméthylol propane, du pentaérythritol, du dipentaérythritol, du tripentaerythritol, et de leurs mélanges.
Selon un mode de réalisation préféré, les esters de polyol sont obtenus à partir de :

i) un acide carboxylique choisi parmi l'acide 2-méthylbutanoïque, l'acide 3-méthylbutanoïque, et leurs mélanges ; et
ii) un polyol choisi dans le groupe constitué du néopentyle glycol, du glycérol, du triméthylol propane, du pentaérythritol, du dipentaérythritol, du tripentaerythritol, et de leurs mélanges.

De préférence, l'ester de polyol est celui obtenu à partir de l'acide 2-méthylbutanoïque et du pentaérythritol.
De préférence, l'ester de polyol est celui obtenu à partir de l'acide 2-méthylbutanoïque et du dipentaérythritol.
De préférence, l'ester de polyol est celui obtenu à partir de l'acide 3-méthylbutanoïque et du pentaérythritol.
De préférence, l'ester de polyol est celui obtenu à partir de l'acide 3-méthylbutanoïque et du dipentaérythritol.
De préférence, l'ester de polyol est celui obtenu à partir de l'acide 2-méthylbutanoïque et du néopentyle glycol.

*Esters de polyol C)*

Selon un autre mode de réalisation, les esters de polyols selon l'invention sont des esters de poly(néopentylpolyol) obtenus par :

i) réaction d'un néopentylpolyol ayant la formule suivante (V):

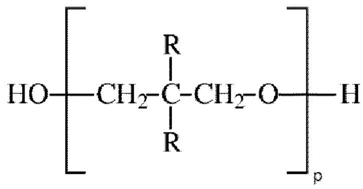

(V)

dans laquelle :

- chaque R représente, indépendamment les uns des autres, $CH_3$, $C_2H_5$ ou $CH_2OH$ ;
- p est un entier allant de 1 à 4 ;

avec au moins un acide monocarboxylique ayant de 2 à 15 atomes de carbone, et en présence d'un catalyseur acide, le ratio molaire entre les groupes carboxyles et les groupes hydroxyles étant inférieur à 1:1, pour former une composition de poly(néopentyl)polyol partiellement estérifiée; et

ii) réaction de la composition de poly(néopentyl)polyol partiellement estérifiée obtenue à l'issue de l'étape i), avec un autre acide carboxylique ayant de 2 à 15 atomes de carbone, pour former la composition finale d'ester(s) de poly(néopentylpolyol).

De préférence, la réaction i) est réalisée avec un ratio molaire allant de 1:4 à 1:2.
De préférence, le néopentylpolyol a la formule suivante (VI) :

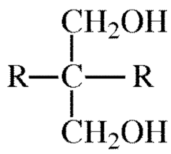

(VI)

dans laquelle chaque R représente, indépendamment les uns des autres, $CH_3$, $C_2H_5$ ou $CH_2OH$.

Des néopentylpolyols préférés sont ceux choisis parmi le pentaérythritol, le dipentaérythritol, le tripentaérythritol, le tétraérythritol, le triméthylolpropane, le triméthyloléthane, et le néopentyle glycole. En particulier, le néopentylpolyol est le pentaérythritol.

De préférence, un unique néopentylpolyol est utilisé pour produire le lubrifiant à base de POE. Dans certains cas, deux ou plusieurs néopentylpolyols sont utilisés. C'est notamment le cas lorsque un produit commercial de pentaérythritol comprend des faibles quantités de dipentaérythritol, de tripentaérythritol, et de tétraérythritol.

Selon un mode de réalisation préféré, l'acide monocarboxylique susmentionné comprend de 5 à 11 atomes de carbone, de préférence de 6 à 10 atomes de carbone.

Les acides monocarboxyliques ont notamment la formule générale (VII) suivante :

R'C(O)OH (VII)

dans laquelle R' est un radical alkyle, linéaire ou ramifié, en C1-C12, un radical aryle en C6-C12, un radical aralkyl en C6-C30. De préférence, R' est un radical alkyle en C4-C10, et préférentiellement en C5-C9.

En particulier, l'acide monocarboxylique est choisi dans le groupe constitué de l'acide butanoïque, de l'acide pentanoïque, de l'acide hexanoïque, de l'acide heptanoïque, de l'acide n-octanoïque, de l'acide n-nonanoïque, de l'acide n-décanoïque, de l'acide 3-méthylbutanoïque, de l'acide 2-méthylbutanoïque, de l'acide 2,4-diméthylpentanoïque, de l'acide 2-éthylhexanoïque, de l'acide 3,3,5-triméthylhexanoïque, de l'acide benzoïque, et de leurs mélanges.

Selon un mode de réalisation préféré, l'acide monocarboxylique est l'acide n-heptanoïque, ou un mélange d'acide n-heptanoïque avec un autre acide monocarboxylique linéaire, en particulier l'acide n-octanoïque et/ou l'acide n-décanoïque. Un tel mélange d'acide monocarboxylique peut comprendre entre 15 et 100 mol% d'acide heptanoïque et entre 85 et 0 mol% d'autre(s) acide(s) monocarboxylique(s). En particulier, le mélange comprend entre 75 et 100 mol% d'acide heptanoïque, et entre 25 et 0 mol% d'un mélange d'acide octanoïque et d'acide décanoïque dans un ratio molaire 3 : 2.

Selon un mode de réalisation préféré, les esters de polyols comprennent :

i) de 45% à 55 % en poids d'un ester de monopentaérythritol avec au moins un acide monocarboxylique ayant de 2 à 15 atomes de carbone ;

ii) moins de 13% en poids d'un ester de dipentaérythritol avec au moins un acide monocarboxylique ayant de 2 à 15 atomes de carbone ;

iii) moins de 10% en poids d'un ester de tripentaérythritol avec au moins un acide monocarboxylique ayant de 2 à 15 atomes de carbone ; et

iv) au moins 25% en poids d'un ester de tétraérythritol et d'autres oligomères de pentaérythritol, avec au moins un acide monocarboxylique ayant de 2 à 15 atomes de carbone.

*Esters de polyol D)*

Selon un autre mode de réalisation, les esters de polyol selon l'invention, ont la formule (VIII) suivante :

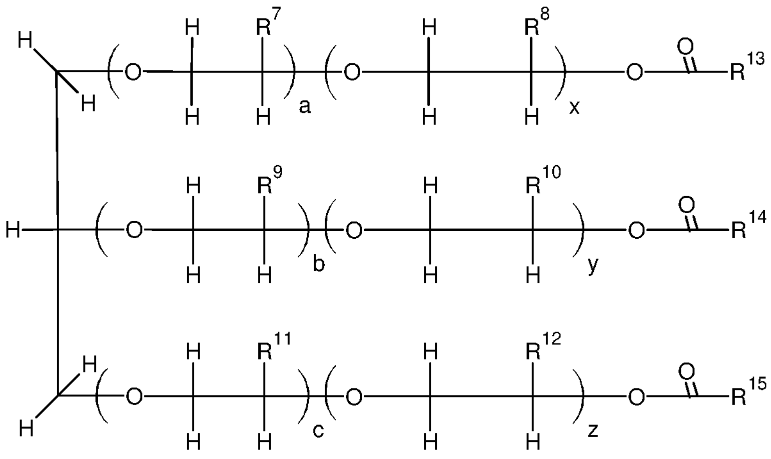

(VIII)

dans laquelle :

- $R^7$, $R^8$, $R^9$, $R^{10}$, $R^{11}$ et $R^{12}$ sont, indépendamment les uns des autres, H ou $CH_3$ ;
- a, b, c, y, x et z, sont, indépendamment les uns des autres, un entier ;
- a+x, b+y, et c+z sont, indépendamment les uns des autres, des entiers allant de 1 à 20 ;
- $R^{13}$, $R^{14}$ et $R^{15}$ sont, indépendamment les uns des autres, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles, $R^{13}$, $R^{14}$ et $R^{15}$, ayant de 1 à 17 atomes de carbone, et pouvant être éventuellement substitués.

Selon un mode de réalisation préféré, chacun de $R^{13}$, $R^{14}$ et $R^{15}$ représente, indépendamment les uns des autres, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de $R^{13}$, $R^{14}$ et $R^{15}$ a, indépendamment les uns des autres, de 3 à 8 atomes de carbone, de préférence de 5 à 7 atomes de carbone.

De préférence, a+x, b+y, et c+z sont, indépendamment les uns des autres, des entiers allant de 1 à 10, préférentiellement de 2 à 8, et encore plus préférentiellement de 2 à 4.

De préférence, $R^7$, $R^8$, $R^9$, $R^{10}$, $R^{11}$ et $R^{12}$ représentent H.

Les esters de polyol de formule (VIII) ci-dessus peuvent typiquement être préparés tels que décrits aux paragraphes [0027] à [0030] de la demande internationale WO2012/177742.

En particulier, les esters de polyol de formule (VIII) sont obtenus par estérification d'alcoxylates de glycérol (tels que décrits au paragraphe [0027] de WO2012/177742) avec un ou plusieurs acides monocarboxyliques ayant de 2 à 18 atomes de carbone.

Selon un mode de réalisation préféré, les acides monocarboxyliques ont l'une des formules suivantes :

$R^{13}COOH$

$R^{14}COOH$ et

$R^{15}COOH$

dans lesquelles $R^{13}$, $R^{14}$ et $R^{15}$ sont tels que définis ci-dessus. Des dérivés des acides carboxyliques peuvent également être utilisés, tels que les anhydrides, les esters et les halogénures d'acyles.

L'estérification peut être réalisée avec un ou plusieurs acides monocarboxyliques. Des acides monocarboxyliques préférés sont ceux choisis dans le groupe constitué de l'acide acétique, l'acide propanoïque, l'acide butyrique, l'acide isobutanoïque, l'acide pivalique, l'acide pentanoïque, l'acide isopentanoique, l'acide hexanoïque, l'acide heptanoïque, l'acide octanoïque, l'acide 2-éthylhexanoïque, l'acide 3,3,5-triméthylhexanoïque, l'acide nonanoïque, l'acide décanoïque, l'acide néodécanoïque, l'acide undécanoïque, l'acide dodécanoïque, l'acide tridécanoïque, l'acide myristique, l'acide pentadécanoïque, l'acide palmitique, l'acide stéarique, l'acide oléïque, l'acide linoléïque, l'acide palmitoléïque, l'acide citronellique, l'acide undécénoïque, l'acide laurique, l'acide undécylénique, l'acide linolénique, l'acide arachidique, l'acide béhénique, l'acide tétrahydrobenzoïque, l'acide abiétique hydrogéné ou non, l'acide 2-éthylhexanoïque, l'acide furoïque, l'acide benzoïque, l'acide 4-acétylbenzoïque, l'acide pyruvique, l'acide 4-tert-butyl-benzoïque, l'acide naphthenique, l'acide 2-méthyl benzoïque, l'acide salicylique, leurs isomères, leurs esters méthyliques, et leurs mélanges.

De préférence, l'estérification est réalisée avec un ou plusieurs acides monocarboxyliques choisis dans le groupe constitué de l'acide pentanoïque, l'acide 2-méthylbutanoïque, l'acide n-hexanoïque, l'acide n-heptanoïque, le 3,3,5-triméthylhexanoïque, l'acide 2-éthylhexanoïque, l'acide n-octanoïque, l'acide n-nonanoïque et l'acide isononanoïque.

De préférence, l'estérification est réalisée avec un ou plusieurs acides monocarboxyliques choisis dans le groupe constitué de l'acide butyrique, l'acide isobutyrique, l'acide n-pentanoïque, l'acide 2-méthylbutanoïque, l'avide 3-méthylbutanoïque, l'avide n-hexanoïque, l'avide n-heptanoïque, l'acide n-octanoïque, l'acide 2-éthylhexanoïque, l'acide 3,3,5-triméthylhexanoïque, l'acide n-nonanoïque, l'acide décanoïque, l'acide undécanoïque, l'acide undécélénique, l'acide laurique, l'acide stéarique, l'acide isostéarique, et leurs mélanges.

Selon un autre mode de réalisation, les esters de polyol selon l'invention, ont la formule (IX) suivante :

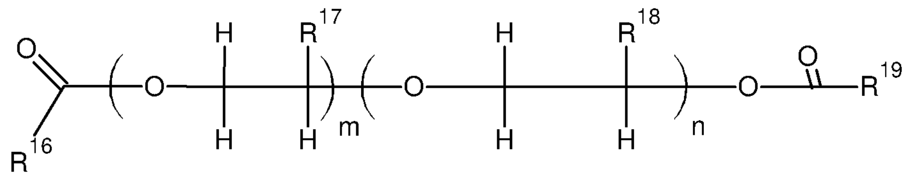

dans laquelle :

- chacun de $R^{17}$ et $R^{18}$, est, indépendamment l'un de l'autre, H ou $CH_3$ ;
- chacun de m et n, est, indépendamment l'un de l'autre, un entier, avec m+n, étant un entier allant de 1 à 10 ;
- $R^{16}$ et $R^{19}$ sont, indépendamment l'un de l'autre, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles, $R^{16}$ et $R^{19}$, ayant de 1 à 17 atomes de carbone, et pouvant être éventuellement substitués.

Selon un mode de réalisation préféré, chacun de $R^{16}$ et $R^{19}$ représente, indépendamment l'un de l'autre, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de $R^{16}$ et $R^{19}$ a, indépendamment l'un de l'autre, de 3 à 8 atomes de carbone, de préférence de 5 à 7 atomes de carbone.

Selon un mode de réalisation préféré, chacun de $R^{17}$ et $R^{18}$ représente H, et/ou m+n est un entier allant de 2 à 8, de 4 à 10, de 2 à 5, ou de 3 à 5. En particulier, m+n vaut 2, 3 ou 4.

Selon un mode de réalisation préféré, les esters de polyol de formule (IX) ci-dessus sont des diesters de triéthylène glycol, des diesters de tétraéthylène glycol, en particulier avec un ou deux acides monocarboxyliques ayant de 4 à 9 atomes de carbone.

Les esters de polyol de formule (IX) ci-dessus peuvent être préparés par estérifications d'un éthylène glycol, d'un propylène glycol, ou d'un oligo- ou polyalkylène glycol, (qui peut être un oligo- ou polyéthylène glycol, oligo- ou polypropylène glycol, ou un copolymère à bloc éthylène glycol-propylène glycol), avec un ou deux acides monocarboxyliques ayant de 2 à 18 atomes de carbone. L'estérification peut être réalisée de manière identique à la réaction d'estérification mise en oeuvre pour préparer les esters de polyols de formule (VIII) ci-dessus.

En particulier, des acides monocarboxyliques identiques à ceux utilisés pour préparer les esters de polyol de formule (VIII) ci-dessus, peuvent être utilisés pour former les esters de polyol de formule (IX).

Selon un mode de réalisation, le lubrifiant à base d'esters de polyol selon l'invention, comprend de 20 à 80%, de préférence de 30 à 70%, et préférentiellement de 40 à 60% en poids d'au moins un ester de polyol de formule (VIII), et de 80 à 20%, de préférence de 70 à 30%, et préférentiellement de 60 à 40% en poids d'au moins un ester de polyol de formule (IX).

De manière générale, certaines fonctions alcools peuvent ne pas être estérifiées lors de la réaction d'estérification, cependant leur proportion reste faible. Ainsi, les POE peuvent comprendre entre 0 et5% molaire relatif de motifs $CH_2OH$ par rapport aux motifs $-CH_2-O-C(=O)-$.

Les lubrifiants POE préférés selon l'invention sont ceux ayant une viscosité de 1 à 1000 centiStokes (cSt) à 40°C, de préférence de 10 à 200 cSt, encore plus préférentiellement de 20 à 100 cSt, et avantageusement de 30 à 80 cSt.

La classification internationale des huiles est donnée par la norme ISO3448-1992 (NF T60-141) et d'après laquelle les huiles sont désignées par leur classe de viscosité moyenne mesurée à la température de 40°C.

***Composition***

Dans la composition de l'invention, la proportion massique de fluide frigorigène F peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition ; ou de 99 à 99,5 % de la composition ; ou de 99,5 à 99,9 % de la composition ; ou plus de 99,9 % de la composition. La teneur en fluide frigorigène F peut également varier dans plusieurs des intervalles ci-dessus : par exemple de 50 à 55%, et de 55 à 60%, c'est-à-dire de 50 à 60%, etc..

Selon un mode de réalisation préféré, la composition de l'invention comprend plus de 50% en poids de fluide frigorigène F, et en particulier de 50% à 99% en poids, par rapport au poids total de la composition.

Dans la composition de l'invention, la proportion massique de lubrifiant à base d'esters de polyol (POE) peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition ; ou de 99 à 99,5 % de la composition ; ou de 99,5 à 99,9 % de la composition ; ou plus de 99,9 % de la composition. La teneur en lubrifiant peut également varier dans plusieurs des intervalles ci-dessus : par exemple de 50 à 55%, et de 55 à 60%, c'est-à-dire de 50 à 60%, etc..

Selon un mode de réalisation, la composition selon l'invention comprend :

- un fluide frigorigène F choisi dans le groupe constitué de :

  HFO-1234yf/HFC-134a/HFC-152a ;

  et
- au moins un lubrifiant à base d'esters de polyol (POE), notamment choisi parmi les esters de polyol A), B), C) ou D) décrits ci-dessus, notamment les esters de polyol de formules (I), (VIII) ou (XI).

Selon un mode de réalisation, la composition selon l'invention comprend :

- un fluide frigorigène F comprenant l'un des mélanges suivants :

  HFO-1234yf/HFC-134a/HFC-152a ;

  et

- au moins un lubrifiant à base d'esters de polyol (POE), notamment choisi parmi les esters de polyol A), B), C) ou D) décrits ci-dessus, notamment les esters de polyol de formules (I), (VIII) ou (XI).

Selon un mode de réalisation, la composition selon l'invention comprend :

- un fluide frigorigène F comprenant (de préférence constitué du) le mélange HFO-1234yf/HFC-134a/HFC-152a, en particulier comprenant de 75,5 à 79,5% en poids de HFO-1234yf, de 12 à 16 % en poids de HFC-152a, et de 6,5 à 10,5% en poids de HFC-134a, et préférentiellement comprenant 77,5% en poids de HFO-1234yf, 14% en poids de HFC-152a et 8,5% en poids de HFC-134a
  et
- au moins un lubrifiant à base d'esters de polyol (POE), notamment choisi parmi les esters de polyol A), B), C) ou D) décrits ci-dessus, notamment les esters de polyol de formules (I), (VIII) ou (XI).

La composition selon l'invention peut comprendre un ou plusieurs additifs (qui ne sont essentiellement pas des composés de transfert de chaleur pour l'application envisagée).

Les additifs peuvent notamment être choisis parmi les nanoparticules, les stabilisants, les tensioactifs, les

agents traceurs, les agents fluorescents, les agents odorants et les agents de solubilisation.

De préférence, les additifs ne sont pas des lubrifiants.

Selon un mode de réalisation, la composition de l'invention est une composition de transfert de chaleur.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de nanoparticules on peut notamment utiliser les nanoparticules de charbon, les oxydes métalliques (cuivre, aluminium), $TiO_2$, $Al_2O_3$, $MoS_2$...

A titre d'agents traceurs (susceptibles d'être détectés), on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur (fluide frigorigène F).

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur (fluide frigorigène F).

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Par « *composé de transfert de chaleur* », respectivement « *fluide de transfert de chaleur* » ou « fluide frigorigène », on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur. En particulier, le fluide frigorigène F est un fluide de transfert de chaleur.

Par « *composition de transfert de chaleur »,* on entend une composition comprenant un fluide de transfert de chaleur et éventuellement un ou plusieurs additifs qui ne sont pas des composés de transfert de chaleur pour l'application envisagée. En particulier, la composition selon l'invention est une composition de transfert de chaleur.

***Utilisations***

La présente invention concerne également un procédé de transfert de chaleur reposant sur l'utilisation d'une installation de transfert de chaleur contenant un circuit de compression de vapeur qui comprend la composition de l'invention en tant que composition de transfert de chaleur, ledit circuit comprenant un séparateur d'huile. Le procédé de transfert de chaleur peut être un procédé de chauffage ou de refroidissement d'un fluide ou d'un corps.

L'invention a également pour objet l'utilisation de la composition décrite ci-dessus en tant que fluide de transfert de chaleur dans un système de compression de vapeur comprenant un séparateur d'huile, de préférence ledit système de compression de vapeur comprenant un compresseur à vis.

Selon un mode de réalisation, le système de compression de vapeur est :

- un système de climatisation ; ou
- un système de réfrigération ; ou
- un système de congélation ; ou
- un système de pompe à chaleur.

La composition de l'invention peut aussi être utilisée dans un procédé de production de travail mécanique ou d'électricité, notamment conformément à un cycle de Rankine.

L'invention concerne également une installation de transfert de chaleur comprenant un circuit de compression de vapeur contenant la composition selon l'invention en tant que composition de transfert de chaleur, ledit circuit contenant un séparateur d'huile, et de préférence un compresseur à vis.

Selon un mode de réalisation, cette installation est choisie parmi les installations mobiles ou stationnaires de

réfrigération, de chauffage (pompe à chaleur), de climatisation et de congélation, et les moteurs thermiques.

Il peut s'agir notamment d'une installation de pompe à chaleur, auquel cas le fluide ou corps que l'on chauffe (généralement de l'air et éventuellement un ou plusieurs produits, objets ou organismes) est situé dans un local ou un habitacle de véhicule (pour une installation mobile). Selon un mode de réalisation préféré, il s'agit d'une installation de climatisation, auquel cas le fluide ou corps que l'on refroidit (généralement de l'air et éventuellement un ou plusieurs produits, objets ou organismes) est situé dans un local ou un habitacle de véhicule (pour une installation mobile). Il peut s'agir d'une installation de réfrigération ou d'une installation de congélation (ou installation cryogénique), auquel cas le fluide ou corps que l'on refroidit comprend généralement de l'air et un ou plusieurs produits, objets ou organismes, situés dans un local ou un contenant.

En particulier, l'installation de transfert de chaleur est une pompe à chaleur, ou une installation de climatisation, par exemple un chiller.

L'invention a également pour objet un procédé de chauffage ou de refroidissement d'un fluide ou d'un corps au moyen d'un circuit de compression de vapeur contenant une composition de transfert de chaleur, ledit procédé comprenant successivement l'évaporation de la composition de transfert de chaleur, la compression de la composition de transfert de chaleur, la condensation de la composition de transfert de chaleur et la détente de la composition de transfert de chaleur, dans lequel la composition de transfert de chaleur est la composition selon l'invention décrite ci-dessus, ledit circuit de compression comprenant un séparateur d'huile, et en particulier un compresseur à vis.

L'invention a également pour objet un procédé de production d'électricité au moyen d'un moteur thermique, ledit procédé comprenant successivement l'évaporation de la composition de transfert de chaleur, la détente de la composition de transfert de chaleur dans une turbine permettant de générer de l'électricité, la condensation de la composition de transfert de chaleur et la compression de la composition de transfert de chaleur, dans lequel la composition de chaleur est la composition décrite ci-dessus, ledit procédé utilisant un séparateur d'huile.

Le circuit de compression de vapeur contenant une composition de transfert de chaleur comprend au moins un évaporateur, un compresseur de préférence à vis, un séparateur d'huile, un condenseur et un détendeur, ainsi que des lignes de transport de composition de transfert de chaleur entre ces éléments. L'évaporateur et le condenseur comprennent un échangeur de chaleur permettant un échange de chaleur entre la composition de transfert de chaleur et un autre fluide ou corps.

L'évaporateur utilisé dans le cadre de l'invention peut être un évaporateur à surchauffe ou un évaporateur noyé. Dans un évaporateur à surchauffe, la totalité de la composition de transfert de chaleur est évaporé à la sortie de l'évaporateur, et la phase vapeur est surchauffée.

Dans un évaporateur noyé, la composition de transfert de chaleur sous forme liquide ne s'évapore pas complètement. Un évaporateur noyé comporte un séparateur de phase liquide et de phase vapeur.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés.

Selon un mode de réalisation, le circuit de compression de vapeur comprend un compresseur centrifuge, et de préférence un compresseur centrifuge et un évaporateur noyé.

Selon un autre mode de réalisation, le circuit de compression de vapeur comprend un compresseur à vis, de préférence bi-vis ou mono-vis. En particulier, le circuit de compression de vapeur comprend un compresseur bi-vis, pouvant mettre en oeuvre un flux conséquent d'huile, par exemple jusqu'à 6,3 Us.

Un compresseur centrifuge est caractérisé en ce qu'il utilise des éléments rotatifs pour accélérer radialement la composition de transfert de chaleur ; il comprend typiquement au moins un rotor et un diffuseur logés dans une enceinte. La composition de transfert de chaleur est introduite au centre du rotor et circule vers la périphérie du rotor en subissant une accélération. Ainsi, d'une part la pression statique augmente dans le rotor, et surtout d'autre part au niveau du diffuseur, la vitesse est convertie en augmentation de la pression statique. Chaque ensemble rotor/diffuseur constitue un étage du compresseur. Les compresseurs centrifuges peuvent comprendre de 1 à 12 étages, selon la pression finale souhaitée et le volume de fluide à traiter.

Le taux de compression est défini comme étant le rapport de la pression absolue de la composition de transfert de chaleur en sortie sur la pression absolue de ladite composition à l'entrée.

La vitesse de rotation pour les grands compresseurs centrifuges va de 3000 à 7000 tours par minute. Les petits compresseurs centrifuges (ou mini-compresseurs centrifuges) fonctionnent généralement à une vitesse de rotation qui va de 40000 à 70000 tours par minute et comportent un rotor de petite taille (généralement moins de 0,15 m).

On peut utiliser un rotor à plusieurs étages pour améliorer l'efficacité du compresseur et limiter le coût énergétique (par rapport à un rotor à un seul étage). Pour un système à deux étages, la sortie du premier étage du rotor alimente l'entrée du second rotor. Les deux rotors peuvent être montés sur un axe unique. Chaque étage peut fournir un taux de compression du fluide d'environ 4 sur 1, c'est-à-dire que la pression absolue de sortie peut être égale à environ quatre fois la pression absolue à l'aspiration. Des exemples de compresseurs centrifuges à deux étages, en particulier pour les applications automobiles, sont décrits dans les documents US 5,065,990 et US 5,363,674.

Le compresseur centrifuge peut être entraîné par un moteur électrique ou par une turbine à gaz (par exemple

alimentée par les gaz d'échappement d'un véhicule, pour les applications mobiles) ou par engrenage.

L'installation peut comprendre un couplage du détendeur avec une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de la composition de transfert de chaleur et le fluide ou corps à chauffer ou refroidir.

L'installation peut également éventuellement comprendre deux circuits de compression de vapeur (ou plus), contenant des compositions de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état de la composition de transfert de chaleur d'une phase liquide (ou diphasique liquide / vapeur) vers une phase vapeur à une pression relativement faible, puis la compression de la composition en phase vapeur jusqu'à une pression relativement élevée, le changement d'état (condensation) de la composition de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par la composition de transfert de chaleur, lors de l'évaporation de cette dernière, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie. Dans le domaine de la climatisation, on peut citer la climatisation domestique, commerciale ou industrielle, où les équipements utilisés sont soit des chillers, soit des équipements à expansion directe. Dans le domaine de la réfrigération, on peut citer la réfrigération domestique, commerciale, les chambres froides, l'industrie alimentaire, le transport frigorifique (camions, bateaux).

Dans le cas d'un procédé de chauffage, de la chaleur est cédée (directement ou indirectement, via un fluide caloporteur) de la composition de transfert de chaleur, lors de la condensation de celle-ci, au fluide ou au corps que l'on chauffe, et ce à une température relativement élevée par rapport à l'environnement. L'installation permettant de mettre en oeuvre le transfert de chaleur est appelée dans ce cas « pompe à chaleur ». Il peut notamment s'agir de pompes à chaleur moyenne et haute température.

Il est possible d'utiliser tout type d'échangeur de chaleur pour la mise en oeuvre des compositions de transfert de chaleur selon l'invention, et notamment des échangeurs de chaleur à co-courant ou, de préférence, des échangeurs de chaleur à contre-courant.

Toutefois, selon un mode de réalisation préféré, l'invention prévoit que les procédés de refroidissement et de chauffage, et les installations correspondantes, comprennent un échangeur de chaleur à contre-courant, soit au condenseur, soit à l'évaporateur. En effet, les compositions de transfert de chaleur selon l'invention sont particulièrement efficaces avec des échangeurs de chaleur à contre-courant. De préférence, à la fois l'évaporateur et le condenseur comprennent un échangeur de chaleur à contre-courant.

Selon l'invention, par « échangeur de chaleur à contre-courant », on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant au sens de la présente demande.

Dans différentes conditions de fonctionnement (climatisation, réfrigération, pompe à chaleur, ...), les compositions selon l'invention sont telles qu'elles induisent avantageusement une surchauffe à la sortie du compresseur (écart entre Température au séparateur et Température au condenseur) supérieure à celle du HFO-1234yf et/ou du HFO-1234ze.

Dans des procédés de « réfrigération à basse température », la température d'entrée de la composition de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 40°C.

Dans des procédés de « refroidissement à température modérée », la température d'entrée de la composition de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 50°C. Ces procédés peuvent être

des procédés de réfrigération ou de climatisation.

Dans des procédés de « chauffage à température modérée », la température d'entrée de la composition de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 50°C.

Dans des procédés de « chauffage haute température », la température d'entrée de la composition de transfert de chaleur à l'évaporateur est de préférence de -20°C à 90°C, notamment de 10°C à 90°C, de manière plus particulièrement préférée de 50°C à 90°C et par exemple d'environ 80°C ; et la température du début de la condensation de la composition de transfert de chaleur au condenseur est de préférence de 70°C à 160°C, notamment de 90°C à 150°C, de manière plus particulièrement préférée de 110°C à 140°C et par exemple d'environ 135°C.

Les compositions selon l'invention sont particulièrement intéressantes dans le transport frigorifique.

Il est considéré comme transport frigorifique tout déplacement de produits périssables sous espace réfrigéré. Les produits alimentaires ou pharmaceutiques représentent une partie importante des produits périssables.

Le transport frigorifique peut être effectué par camion, rail ou bateau, éventuellement à l'aide des containers multi-plateformes qui s'adaptent aussi bien sur les camions, les rails ou les bateaux.

Dans le transport frigorifique, la température des espaces réfrigérés est comprise entre -30°C et 16°C. La charge en réfrigérant dans le transport par camion, rail ou containers multi-plateforme varie entre 4 kg et 8 kg de réfrigérant. Les installations dans les bateaux peuvent contenir entre 100 et 500kg.

Le réfrigérant le plus utilisé à ce jour est le R404A.

Les températures de fonctionnement des installations frigorifiques sont fonction des besoins en température de réfrigération et des conditions climatiques extérieures. Une même installation frigorifique doit être capable de couvrir une large gamme de température comprise entre -30°C et 16°C et opérer aussi bien dans des climats froid que chaud.

La condition la plus contraignante en température d'évaporation est -30°C.

***Séparateur d'huile***

Selon l'invention, le circuit de compression de vapeur comprend un séparateur d'huile.

Selon un mode de réalisation, le séparateur d'huile est situé entre le compresseur et le condenseur.

Selon l'invention, le séparateur d'huile peut être un réservoir ou un cylindre comprenant au moins un déflecteur ou écran pour collecter l'huile.

Selon un mode de réalisation, le séparateur d'huile comprend un mécanisme flotteur/vanne/pointeau. Dans ce cas particulier, l'huile, récupérée dans le séparateur, est stockée dans la partie inférieure contenant le mécanisme flotteur/vanne/pointeur. Lorsque le niveau d'huile est suffisamment élevé pour soulever le mécanisme flotteur, le système vanne-pointeau s'ouvre et permet à l'huile de réintégrer le(s) carter(s) du (des) compresseur(s). Le retour d'huile s'effectue notamment grâce à la différence de pression entre celle du séparateur d'huile et celle du(des) carter(s) du(des) compresseur(s).

Le séparateur d'huile permet avantageusement de séparer l'huile de lubrification (lubrifiant) du fluide frigorigène dans le mélange fluide frigorigène gazeux et huile de lubrification, issu du compresseur. En particulier, le séparateur d'huile permet la libération du fluide frigorigène vers le condenseur, et le retour de l'huile de lubrification séparée, au compresseur.

Le circuit de compression selon l'invention peut comprendre une ligne de retour d'huile entre le séparateur d'huile et l'entrée du compresseur.

En particulier, le séparateur d'huile comprend une valve d'entrée (permettant notamment l'entrée de la composition de l'invention), une valve de sortie dans la partie supérieure du séparateur (permettant notamment de récupérer une partie du fluide frigorigène qui va se diriger vers le condenseur), et une valve de sortie dans la partie inférieure du séparateur (permettant notamment la sortie de l'huile pour son retour au compresseur).

Typiquement, les séparateurs d'huile peuvent mettre en oeuvre au moins l'une des techniques suivantes :

- la coalescence : phénomène par lequel deux substances identiques, mais dispersées, ont tendance à se réunir ;
- la centrifugation : cette technique utilise la force centrifuge pour séparer des fluides de densité différentes ;
- la réduction de la vitesse : cette technique permet aux molécules les plus lourdes de poursuivre leur trajectoire, grâce à leur inertie, alors que les molécules les plus légères se dispersent dans le volume interne du séparateur d'huile ;
- le changement de direction : cette technique associée à la précédente permet d'augmenter l'efficacité de séparation des gouttelettes d'huile (molécules lourdes) présentes dans la vapeur (molécules légères). Les gouttelettes d'huile conservent notamment leur trajectoire initiale, sous l'effet de leur masse et de leur vitesse initiale, tandis que la vapeur est dirigée vers la sortie du séparateur.

La coalescence peut être effectuée à l'aide de tamis métalliques ou de cartouches coaslescentes.

La centrifugation peut être réalisée à l'aide de turbulateurs, de systèmes hélicoïdaux ou d'aménagements particuliers des séparateurs (cyclone).

Un séparateur d'huile peut notamment mettre en oeuvre plusieurs des techniques susmentionnées.

Parmi les séparateurs d'huile utiles selon l'invention, on peut par exemple citer la gamme TURBOIL de Carly, OUB de Danfoss, OS d'Emerson, série 5520 et 5540 de Castel, les séparateur Temprite et les séparateurs AC&R, les séparateurs OAS de Bitzer pour les compresseurs à vis.

Le circuit de compression de vapeur peut en outre comprendre un système de refroidissement de l'huile, et éventuellement une pompe à huile et/ou un système de distribution d'huile, situé(s) entre le séparateur d'huile et l'entrée du compresseur.

La pompe à huile peut être utilisée pour remédier aux pertes de pression et/ou pour permettre à l'huile d'atteindre une pression supérieure à la pression de décharge du compresseur.

Le système de refroidissement de l'huile peut être utilisé pour refroidir l'huile issue du compresseur et du séparateur d'huile.

## Inflammabilité

Les fluides frigorigènes F préférés de la présente invention présentent en outre l'avantage d'avoir une vitesse de propagation de flamme inférieure à 10 cm/s, de préférence inférieure à 8 cm/s, voire 7 cm/s ou même 3 cm/s suivant la méthode de mesure développée par Jabbour T - 2004. Certaines compositions sont même non inflammables.

Le dispositif expérimental utilise la méthode de tube en verre verticale (nombre de tube 2, longueur 150 cm, diamètre 40 cm). L'utilisation de deux tubes permet de faire deux tests avec la même concentration en même temps.

Les tubes sont dotés d'électrodes en tungstène, ces dernières sont placées au fond de chaque tube, distant de 6,35mm (1/4 inch) et sont reliées à un générateur de 15kV et 30mA.

La méthode des essais est développée dans la thèse de T. Jabbour, « Classification de l'inflammabilité des fluides frigorigènes basée sur la vitesse fondamentale de flamme » sous la direction de Denis Clodic. Thèse, Paris, 2004.

A titre d'exemple, la vitesse de propagation de flamme pour la composition HFO-1234yf/R134a/R152a : 78,9/7,0/14,1 %massique est de 4,75 cm/s et celle de la composition HFO-1234yf/R134a/R152a : 74,2/7,7/18,1 %massique est de 6 cm/s.

Tous les modes de réalisation décrits ci-dessus peuvent être combinés les uns avec les autres. Ainsi, chaque fluide frigorigène préféré de la composition peut être combiné avec chaque ester de polyol préféré (esters A, B, C ou D), dans les différentes proportions mentionnées. Les différentes compositions préférées peuvent être utilisées dans les diverses applications décrites ci-dessus.

Les exemples suivants illustrent l'invention sans toutefois la limiter.

FIGURE 1 : La figure 1 est un diagramme du mélange R134a/huile Triton SE 55 représentant en abscisse la température (en °C) et en ordonnée la pression (en bar), réalisé dans les conditions de fonctionnement de l'exemple ci-après. A 0% d'huile, on a 100% de R134a, tandis qu'à 70% d'huile on a un mélange comprenant 30% de R134a. Ce diagramme montre qu'à pression constante, la concentration du réfrigérant dans l'huile diminue quand la température du mélange Ts augmente.

## EXEMPLES

Fournisseur de l'huile POE Triton SE 55 d : FUCHS

Dans un séparateur d'huile intégré à un compresseur à vis, l'huile est récupérée dans la partie basse du séparateur. Dans cette exemple, les quantités de réfrigérant piégées par l'huile dans le séparateur sont analysées.

Le mélange réfrigérant/huile dans le séparateur est à une température Ts (qui est également la température du réfrigérant à la sortie du compresseur) et la pression dans le séparateur est égale à la pression de saturation vapeur du réfrigérant à l'entrée du condenseur (Pcond). Donc, cela se traduit par un système qui travaille à une température de condensation (Tcond), qui est la température de saturation du réfrigérant seul à la pression Pcond correspondante.

De manière générale, l'analyse d'un diagramme réfrigérant/huile type (tel qu'illustré par exemple sur la figure 1 pour le R134a) montre que, à pression constante (Pcond), la concentration du réfrigérant dans l'huile diminue quand la température du mélange (huile/réfrigérant, Ts) augmente et s'éloigne de la température de saturation du réfrigérant seul (Tcond), l'écart entre Ts et Tcond représentant la surchauffe à la sortie du compresseur.

La température Tcond, la pression Pcond et la température Ts dans le séparateur d'huile sont définies par les besoins de fonctionnement de l'installation. Le pourcentage d'huile dans le réfrigérant sera donc déduit du diagramme correspondant réfrigérant/huile à la pression Pcond et à la température Ts. Cette méthode permet de comparer d'une manière indirecte les réfrigérants en regardant la surchauffe à la sortie du compresseur. Considérons un système de conditionnement d'air qui fonctionne sous les conditions suivantes en mode chauffage (pompe à chaleur) :

- Température de condensation Tcond = 70°C ;
- Température d'évaporation : 0°C ;
- Surchauffe à l'évaporateur : 0°C ;
- Sous refroidissement : 0°C ;
- Efficacité compresseur : 75% ;
- Cas de référence : R134a et l'huile POE Triton SE 55 ;

D'après le diagramme de la figure 1, pour une température (Ts) dans le séparateur de 87°C et une pression de 21 bars abs, la surchauffe à la sortie du compresseur est de 17°C et le pourcentage d'huile est de 75% massique (25% massique de R134a dans l'huile).

Pour un mélange HFO-1234yf/huile POE Triton SE 55, dans les mêmes conditions de fonctionnement décrites ci-dessus, la pression au condenseur est d'environ 20,5 bars abs et la surchauffe à la sortie du compresseur d'environ 4,8°C.

Le HFO-1234yf à une pression de saturation très proche du R134a mais une faible surchauffe. En conséquence, la concentration du réfrigérant dans la phase liquide du séparateur d'huile sera supérieur à 30%, voire 35%, massique.

En conséquence, pour un même débit de circulation du liquide huile/réfrigérant, l'augmentation du pourcentage de réfrigérant dans l'huile du séparateur aboutie à diminution de la quantité d'huile de lubrification en circulation dans le compresseur et aussi à une diminution de la viscosité du mélange huile/réfrigérant. Donc, le remplacement direct du R134a par du HFO-1234yf peut endommager le compresseur (problème de lubrification, faible viscosité) et diminuer les performances..

Le tableau ci-dessous donne la valeur de surchauffe à la sortie du compresseur par rapport à la température de condensation sous les mêmes conditions de fonctionnement, décrites ci-dessus pour le R134a et HFO-1234yf, pour différents mélanges :

Le ratio A correspond au rapport suivant :

$$A = \left[\frac{surchauffe\ au\ compresseur\ du\ mélange - surchauffe\ au\ compresseur\ de\ 1234yf}{surchauffe\ au\ compresseur\ de\ 1234yf}\right] \times 100$$

| | | P (bar abs) | | Température (°C) | | | | |
|---|---|---|---|---|---|---|---|---|
| | | condenseur | évaporateur | entrée évaporateur | sortie compresseur | saturation vapeur au condenseur | surchauffe compresseur | A |
| HFO-1234yf | | 20,45 | 3,16 | 0,0 | 74,8 | 70,0 | 4,8 | 0 |
| HFO-1234ze | | 16,11 | 2,17 | 0,0 | 77,2 | 70,0 | 7,2 | 50 |
| R134a | | 21,17 | 2,93 | 0,0 | 87,6 | 70,0 | 17,6 | 266 |
| R1234yf | R134a | | | | | | | |
| 60,0 | 40,0 | 21,74 | 3,25 | 0,0 | 79,6 | 70,0 | 9,6 | 99 |
| 56,0 | 44,0 | 21,79 | 3,25 | 0,0 | 80,1 | 70,0 | 10,1 | 109 |

| | | | | | | | | |
|---|---|---|---|---|---|---|---|---|
| 50,0 | 50,0 | 21,83 | 3,23 | 0,0 | 80,8 | 70,0 | 10,8 | 125 |
| 45,0 | 55,0 | 21,85 | 3,21 | 0,0 | 81,5 | 70,0 | 11,5 | 138 |
| 40,0 | 60,0 | 21,85 | 3,19 | -0,1 | 82,1 | 70,0 | 12,1 | 152 |
| R134a | R1234ze | | | | | | | |
| 42,0 | 58,0 | 18,77 | 2,53 | -0,3 | 82,3 | 70,5 | 11,7 | 144 |
| 50,0 | 50,0 | 19,18 | 2,60 | -0,3 | 83,0 | 70,5 | 12,6 | 161 |
| 55,0 | 45,0 | 19,42 | 2,64 | -0,2 | 83,5 | 70,4 | 13,1 | 171 |
| 60,0 | 40,0 | 19,65 | 2,68 | -0,2 | 84,0 | 70,4 | 13,6 | 182 |
| R1234yf | R152a | | | | | | | |
| 85,0 | 15,0 | 20,74 | 3,17 | 0,0 | 79,1 | 70,0 | 9,1 | 89 |
| 80,0 | 20,0 | 20,77 | 3,16 | 0,0 | 80,6 | 70,0 | 10,6 | 119 |
| R152a | R1234ze | | | | | | | |
| 5,0 | 95,0 | 16,61 | 2,23 | -0,1 | 79,1 | 70,2 | 8,9 | 84 |
| 10,0 | 90,0 | 17,02 | 2,30 | -0,2 | 80,7 | 70,3 | 10,4 | 116 |
| 15,0 | 85,0 | 17,36 | 2,36 | -0,2 | 82,3 | 70,3 | 11,9 | 147 |
| 20,0 | 80,0 | 17,64 | 2,41 | -0,2 | 83,7 | 70,3 | 13,4 | 177 |
| 25,0 | 75,0 | 17,88 | 2,45 | -0,2 | 85,0 | 70,3 | 14,8 | 206 |

| | | | P (bar abs) | | Température (°C) | | | | |
|---|---|---|---|---|---|---|---|---|---|
| | | | condenseur | évaporateur | entrée évaporateur | sortie compresseur | saturation vapeur au condenseur | surchauffe compresseur | A |
| HFO-1234yf | | | 20,45 | 3,16 | 0,0 | 74,8 | 70,0 | 4,8 | 0 |
| HFO-1234ze | | | 16,11 | 2,17 | 0,0 | 77,2 | 70,0 | 7,2 | 50 |
| R134a | | | 21,17 | 2,93 | 0,0 | 87,6 | 70,0 | 17,6 | 266 |
| R1234yf | R134a | R152a | | | | | | | |
| 81,5 | 8,5 | 10,0 | 20,95 | 3,19 | 0,0 | 78,7 | 70,0 | 8,7 | 81 |
| 77,5 | 8,5 | 14,0 | 20,95 | 3,18 | 0,0 | 79,9 | 70,0 | 9,9 | 105 |
| 76,5 | 8,5 | 15,0 | 20,95 | 3,17 | 0,0 | 80,2 | 70,0 | 10,2 | 111 |
| 71,5 | 8,5 | 20,0 | 20,92 | 3,15 | 0,0 | 81,7 | 70,0 | 11,6 | 142 |
| 66,5 | 8,5 | 25,0 | 20,88 | 3,12 | -0,1 | 83,1 | 70,0 | 13,1 | 173 |
| R134a | R152a | R1234ze | | | | | | | |
| 2,0 | 10,0 | 88,0 | 17,13 | 2,31 | -0,2 | 81,0 | 70,3 | 10,6 | 121 |
| 5,0 | 10,0 | 85,0 | 17,30 | 2,34 | -0,2 | 81,3 | 70,4 | 11,0 | 127 |
| 8,5 | 10,0 | 81,5 | 17,49 | 2,36 | -0,2 | 81,7 | 70,4 | 11,3 | 135 |

(suite)

| | | | P (bar abs) | | Température (°C) | | | | |
|---|---|---|---|---|---|---|---|---|---|
| | | | conde nseur | évaporat eur | entrée évaporat eur | sortie compresse ur | satu ratio n vapeur au condens eur | surchauff e compres seur | A |
| 2,0 | 15,0 | 83,0 | 17,46 | 2,37 | -0,2 | 82,5 | 70,3 | 12,1 | 152 |
| 5,0 | 15,0 | 80,0 | 17,61 | 2,39 | -0,2 | 82,8 | 70,4 | 12,4 | 158 |
| 8,5 | 15,0 | 76,5 | 17,78 | 2,42 | -0,2 | 83,1 | 70,4 | 12,8 | 165 |
| 2,0 | 20,0 | 78,0 | 17,73 | 2,42 | -0,2 | 83,9 | 70,3 | 13,6 | 181 |
| 5,0 | 20,0 | 75,0 | 17,86 | 2,44 | -0,2 | 84,2 | 70,3 | 13,9 | 188 |
| 8,5 | 20,0 | 71,5 | 18,01 | 2,46 | -0,2 | 84,5 | 70,3 | 14,2 | 195 |

Les mélanges selon l'invention ont avantageusement une surchauffe au compresseur plus élevée que le HFO-1234yf seul, et notamment un coefficient A, tel que défini ci-dessus, supérieur à 50%, de préférence supérieur à 80% par rapport au HFO-1234yf.

Ainsi, les mélanges selon l'invention permettent avantageusement de diminuer (et/ou d'éviter) la quantité de réfrigérant piégé dans l'huile de lubrification par rapport au HFO-1234yf seul, et donc d'augmenter l'efficacité de l'installation en raison de la circulation du réfrigérant en quantité plus élevée dans le système. En outre, avec les mélanges de l'invention, la quantité d'huile de lubrification récupérée par le séparateur étant plus élevée qu'avec le HFO-1234yf, une meilleure lubrification du compresseur est obtenue.

## Revendications

1. Utilisation d'une composition comprenant un lubrifiant à base d'esters de polyol, et un fluide frigorigène F comprenant au moins un tétrafluoropropène choisi parmi HFO-1234yf et HFO-1234ze et du 1,1-difluoroéthane (HFC-152a) dans un système de transfert de chaleur contenant un circuit de compression de vapeur comprenant un séparateur d'huile.

2. Utilisation selon la revendication 1, **caractérisée en ce que** les esters de polyol répondent la formule suivante (I) suivante :

$$R^1[OC(O)R^2]_n \qquad (I)$$

dans laquelle :

- $R^1$ est un radical hydrocarboné, linéaire ou ramifié, éventuellement substitué par au moins un groupement hydroxyle et/ou comprenant au moins un hétéroatome choisi dans le groupe constitué de -O-, -N-, et -S- ;
- chaque $R^2$ est, indépendamment les uns des autres, choisi dans le groupe constitué de :
  - i) H ;
  - ii) un radical hydrocarboné aliphatique ;
  - iii) un radical hydrocarboné ramifié ;
  - iv) un mélange d'un radical ii) et/ou iii), avec un radical hydrocarboné aliphatique comprenant de 8 à 14 atomes de carbone ; et
- n est un entier d'au moins 2.

3. Utilisation selon la revendication 1, **caractérisée en ce que** les esters de polyol sont obtenus à partir de polyol choisi dans le groupe constitué du néopentyle glycol, du glycérol, du triméthylol propane, du pentaérythritol, du dipentaérythritol, du tripentaerythritol, et de leurs mélanges.

4. Utilisation selon la revendication 1 ou 3, **caractérisée en ce que** les esters de polyol sont obtenus à partir d'au

moins un acide carboxylique ramifié comprenant de 5 à 8 atomes de carbone.

**5.** Utilisation selon la revendication 1, **caractérisée en ce que** les esters de polyol sont des esters de poly(néopentylpolyol) obtenus par :

i) réaction d'un néopentylpolyol ayant la formule suivante (V):

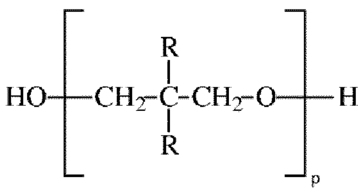

(V)

dans laquelle :

◦ chaque R représente, indépendamment les uns des autres, $CH_3$, $C_2H_5$ ou $CH_2OH$ ;
◦ p est un entier allant de 1 à 4 ;

avec au moins un acide monocarboxylique ayant de 2 à 15 atomes de carbone, en présence d'un catalyseur acide, le ratio molaire entre les groupes carboxyles et les groupes hydroxyles étant inférieur à 1:1, pour former une composition de poly(néopentyl)polyol partiellement estérifiée; et
ii) réaction de la composition de poly(néopentyl)polyol partiellement estérifiée obtenue à l'issue de l'étape i), avec un autre acide carboxylique ayant de 2 à 15 atomes de carbone, pour former la composition d'esters de poly(néopentylpolyol).

**6.** Utilisation selon la revendication 1, **caractérisée en ce que** les esters de polyol ont l'une des formules (VIII) ou (IX) suivantes :

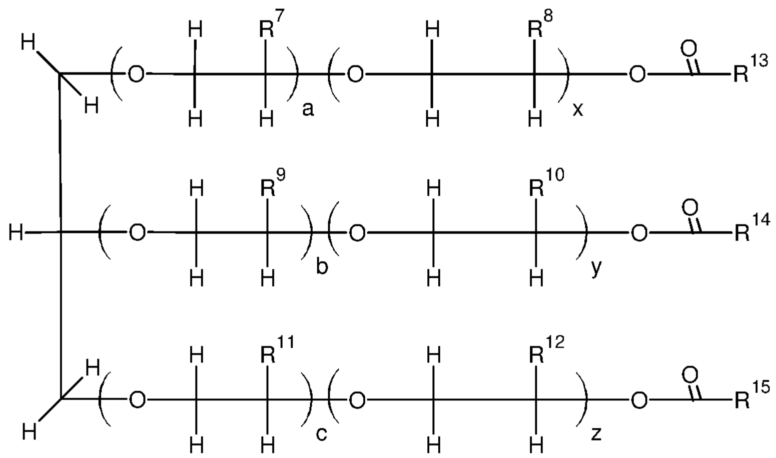

(VIII)

dans laquelle :

- $R^7$, $R^8$, $R^9$, $R^{10}$, $R^{11}$ et $R^{12}$ sont, indépendamment les uns des autres, H ou $CH_3$ ;
- a, b, c, y, x et z, sont, indépendamment les uns des autres, un entier ;
- a+x, b+y, et c+z sont, indépendamment les uns des autres, des entiers allant de 1 à 20 ;
- $R^{13}$, $R^{14}$ et $R^{15}$ sont, indépendamment les uns des autres, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles,

$R^{13}$, $R^{14}$ et $R^{15}$, ayant de 1 à 17 atomes de carbone, et pouvant être éventuellement substitués.

ou

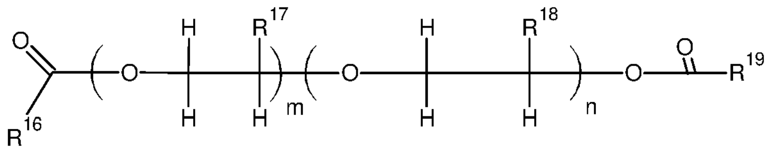

(IX)

dans laquelle :

- chacun de $R^{17}$ et $R^{18}$, est, indépendamment l'un de l'autre, H ou $CH_3$ ;
- chacun de m et n, est, indépendamment l'un de l'autre, un entier, avec m+n, étant un entier allant de 1 à 10 ;
- $R^{16}$ et $R^{19}$ sont, indépendamment l'un de l'autre, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles,

$R^{16}$ et $R^{19}$, ayant de 1 à 17 atomes de carbone, et pouvant être éventuellement substitués.

**7.** Utilisation selon l'une quelconque des revendications 1 à 6, **caractérisée en ce que** le fluide frigorigène F comprend l'un des mélanges suivants :

| | | |
|---|---|---|
| HFO-1234yf | HFC-152a | |
| HFO-1234ze | HFC-152a | |
| HFO-1234yf | HFC-134a | HFC-152a |
| HFO-1234ze | HFC-134a | HFC-152a |

**8.** Utilisation selon l'une quelconque des revendications 1 à 7, **caractérisée en ce que** le fluide frigorigène F comprend de 75,5 à 79,5% en poids de HFO-1234yf, de 12 à 16 % en poids de HFC-152a, et de 6,5 à 10,5% en poids de HFC-134a.

**9.** Utilisation selon l'une quelconque des revendications 1 à8, **caractérisées en ce que** le fluide frigorigène F comprend 77,5% (± 0,2%) en poids de HFO-1234yf, 14% (± 0,2%) en poids de HFC-152a et 8,5% (± 0,2%) en poids de HFC-134a, ladite composition étant azéotropique à une température d'ébullition comprise entre -40,00°C et 70,00°C, à une pression comprise entre 0,5 et 21,0 bar abs (± 0,5%), et notamment une température d'ébullition de 26,97°C (± 0,50°C) à la pression de 7,3 bar abs (± 0,5%).

**10.** Installation de transfert de chaleur comprenant un circuit de compression de vapeur contenant une composition comprenant un lubrifiant à base d'esters de polyol, et un fluide frigorigène F comprenant au moins un tétrafluoropropène choisi parmi HFO-1234yf et HFO-1234ze et du 1,1-difluoroéthane (HFC-152a), en tant que composition de transfert de chaleur, ledit circuit de compression de vapeur comprenant un séparateur d'huile.

**11.** Installation selon la revendication 10, choisie parmi les installations mobiles ou stationnaires de chauffage par pompe à chaleur, de climatisation, de réfrigération, de congélation et les moteurs thermiques.

**12.** Procédé de production d'électricité au moyen d'un moteur thermique, ledit procédé comprenant successivement l'évaporation de la composition de transfert de chaleur, la détente de la composition de transfert de chaleur dans une turbine permettant de générer de l'électricité, la condensation de la composition de transfert de chaleur et la compression de la composition de transfert de chaleur,

dans lequel le procédé comprenant l'utilisation d'un séparateur d'huile, et
ladite composition de transfert de chaleur étant une composition comprenant un lubrifiant à base d'esters de polyol, et un fluide frigorigène F comprenant au moins un tétrafluoropropène choisi parmi HFO-1234yf et HFO-1234ze et du 1,1-difluoroéthane (HFC-152a).

**13.** Procédé de chauffage ou de refroidissement d'un fluide ou d'un corps au moyen d'un circuit de compression de vapeur contenant une composition de transfert de chaleur, ledit procédé comprenant successivement l'évaporation de la composition de transfert de chaleur, la compression de la composition de transfert de chaleur, la condensation de la composition de transfert de chaleur et la détente de la composition de transfert de chaleur,

ledit circuit de compression comprenant un séparateur d'huile, et
ladite composition de transfert de chaleur étant une composition comprenant un lubrifiant à base d'esters de polyol, et un fluide frigorigène F comprenant au moins un tétrafluoropropène choisi parmi HFO-1234yf et HFO-1234ze et du 1,1-difluoroéthane (HFC-152a).

## Patentansprüche

**1.** Verwendung einer Zusammensetzung, die ein Schmiermittel auf Basis von Polyolestern und ein Kältemittel F, welches mindestens ein Tetrafluorpropen umfasst, das aus HFO-1234yf und HFO-1234ze und 1,1-Difluorethan (HFC-152a) ausgewählt ist, in einem Wärmeübertragungssystem umfasst, welches einen Dampfverdichtungskreislauf beinhaltet, der einen Ölabscheider umfasst.

**2.** Verwendung nach Anspruch 1, **dadurch gekennzeichnet, dass** die Polyolester der folgenden Formel (I) entsprechen:

$$R^1[OC(O)R^2]_n \qquad (I)$$

in welcher:

- $R^1$ für einen geradkettigen oder verzweigten Kohlenwasserstoffrest, der möglicherweise mit mindestens einer Hydroxylgruppe substituiert ist und/oder mindestens ein Heteroatom umfasst, das aus der Gruppe ausgewählt ist, welche aus -O-, - N- und -S- besteht;
- jedes $R^2$ unabhängig voneinander aus der Gruppe ausgewählt ist, welche aus Folgendem besteht:
  - i) H;
  - ii) einem aliphatischen Kohlenwasserstoffrest;
  - iii) einem verzweigten Kohlenwasserstoffrest;
  - iv) einer Mischung aus einem Rest ii) und/oder iii) mit einem aliphatischen Kohlenwasserstoffrest, der 8 bis 14 Kohlenstoffatome umfasst; und
- n eine ganze Zahl ist, die mindestens 2 beträgt.

**3.** Verwendung nach Anspruch 1, **dadurch gekennzeichnet, dass** die Polyolester ausgehend von Polyolen erhalten wurden, die aus der Gruppe ausgewählt sind, welche aus Neopentylglykol, Glycerin, Trimethylolpropan, Pentaerythrit, Dipentaerythrit, Tripentaerythrit und deren Mischungen besteht.

**4.** Verwendung nach Anspruch 1 oder 3, **dadurch gekennzeichnet, dass** die Polyolester ausgehend von mindestens einer verzweigten Carbonsäure erhalten wurden, die 5 bis 8 Kohlenstoffatome umfasst.

**5.** Verwendung nach Anspruch 1, **dadurch gekennzeichnet, dass** es sich bei den Polyolestern um Poly(neopentylpolyol)ester handelt, die folgendermaßen erhalten wurden:

i) Umsetzen eines Neopentylpolyols, das die folgende Formel (V) aufweist:

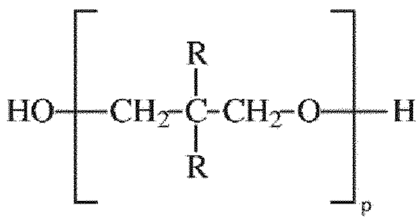

(V)

in welcher:

- ◦ jedes R unabhängig voneinander für $CH_3$, $C_2H_5$ oder $CH_2OH$ steht;
- ◦ p für eine ganze Zahl im Bereich von 1 bis 4 steht;

mit mindestens einer Monocarbonsäure, die 2 bis 15 Kohlenstoffatome aufweist, in Gegenwart eines sauren Katalysators, wobei das Molverhältnis zwischen den Carboxylgruppen und den Hydroxylgruppen weniger als 1:1 beträgt, um eine Zusammensetzung aus teilweise verestertem Poly(neopentyl)polyol zu bilden; und
ii) Umsetzen der Zusammensetzung aus teilweise verestertem Poly(neopentyl)polyol, wie sie nach Abschluss des Schrittes i) erhalten wurde, mit einer weiteren Carbonsäure, die 2 bis 15 Kohlenstoffatome aufweist, um die Zusammensetzung aus Poly(neopentylpolyol)estern zu bilden.

**6.** Verwendung nach Anspruch 1, **dadurch gekennzeichnet, dass** die Polyolester eine der folgenden Formeln (VIII) oder (IX) haben:

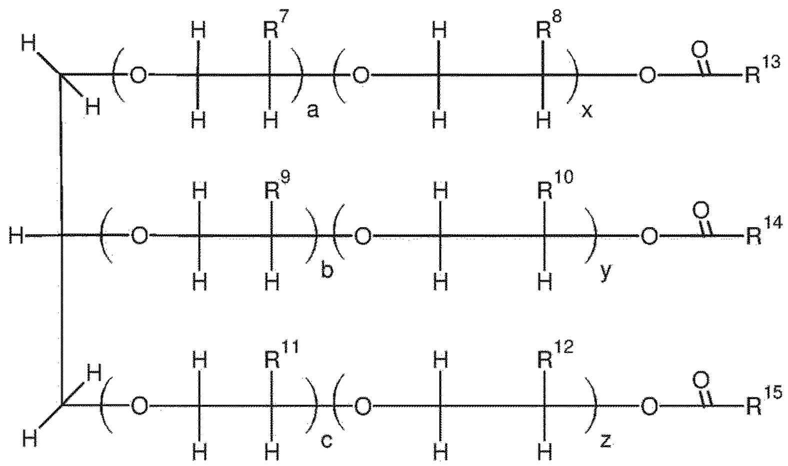

(VIII)

in welcher:

- $R^7$, $R^8$, $R^9$, $R^{10}$, $R^{11}$ und $R^{12}$ unabhängig voneinander für H oder $CH_3$ stehen;
- a, b, c, y, x und z unabhängig voneinander für eine ganze Zahl stehen;
- a+x, b+y und c+z unabhängig voneinander für ganze Zahlen im Bereich von 1 bis 20 stehen;
- $R^{13}$, $R^{14}$ und $R^{15}$ unabhängig voneinander aus der Gruppe ausgewählt sind, die aus den aliphatischen oder verzweigten Alkylen, den Alkenylen, den Cycloalkylen, den Arylen, den Alkylarylen, den Arylalkylen, den Alkylcycloalkylen, den Cycloalkylalkylen, den Arylcycloalkylen den Cycloalkylarylen, den Alkylcycloalkylarylen, den Alkylarylcycloalkylen, den Arylcycloalkylalkylen, den Arylalkylcycloalkylen, den Cycloalkylalkylaryl und den Cycloalkylarylalkylen besteht;

$R^{13}$, $R^{14}$ und $R^{15}$ von 1 bis 17 Kohlenstoffatomen aufweisen und möglicherweise substituiert sein können,

oder

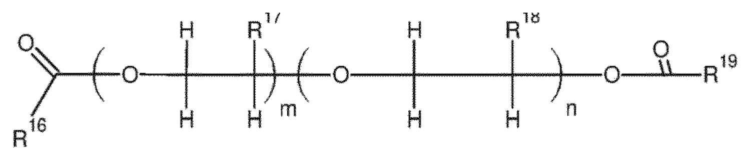

(IX)

in welcher:

- $R^{17}$ und $R^{18}$ jeweils auf unabhängige Weise für H oder $CH_3$ stehen;
- m und n jeweils unabhängig voneinander für eine ganze Zahl stehen, wobei m+n eine ganze Zahl im Bereich von 1 bis 10 ist;

- $R^{16}$ und $R^{19}$ unabhängig voneinander aus der Gruppe ausgewählt sind, die aus den aliphatischen oder verzweigten Alkylen, den Alkenylen, den Cycloalkylen, den Arylen, den Alkylarylen, den Arylalkylen, den Alkylcycloalkylen, den Cycloalkylalkylen, den Arylcycloalkylen den Cycloalkylarylen, den Alkylcycloalkylarylen, den Alkylarylcycloalkylen, den Arylcycloalkylalkylen, den Arylalkylcycloalkylen, den Cycloalkylalkylaryl und den Cycloalkylarylalkylen besteht,
$R^{16}$ und $R^{19}$ von 1 bis 17 Kohlenstoffatomen aufweisen und möglicherweise substituiert sein können.

7. Verwendung nach einem beliebigen der Ansprüche 1 bis 6, **dadurch gekennzeichnet, dass** das Kältemittel F eine der folgenden Mischungen umfasst:

| | | |
|---|---|---|
| HFO-1234yf | HFC-152a | |
| HFO-1234ze | HFC-152a | |
| HFO-1234yf | HFC-134a | HFC-152a |
| HFO-1234yf | HFC-134a | HFC-152a |

8. Verwendung nach einem beliebigen der Ansprüche 1 bis 7, **dadurch gekennzeichnet, dass** das Kältemittel F von 75,5 bis 79,5 Gewichts-% an HFO-1234yf, von 12 bis 16 Gewichts-% an HFC-152a und von 6,5 bis 10,5 Gewichts-% an HFC-134a umfasst.

9. Verwendung nach einem beliebigen der Ansprüche 1 bis 8, **dadurch gekennzeichnet, dass** das Kältemittel F 77,5% (± 0,2%) nach Gewicht an HFO-1234yf, 14% (± 0,2%) nach Gewicht an HFC-152a und 8,5% (± 0,2%) an HFC-134a umfasst, wobei die Zusammensetzung bei einer Siedetemperatur im Bereich von -40,00 °C und 70,00 °C, bei einem Druck im Bereich von 0,5 bis 21,0 bar abs. (± 0,5%), und insbesondere bei einer Siedetemperatur von 26,97 °C (± 0,50 °C) bei einem Druck von 7,3 bar abs. (± 0,5%), ein Azeotrop bildet.

10. Wärmeübertragungsanlage, die einen Dampfverdichtungskreislauf umfasst, welcher eine Zusammensetzung enthält, die ein Schmiermittel auf Basis von Polyolestern und ein Kältemittel F, welches mindestens ein Tetrafluorpropen umfasst, das aus HFO-1234yf und HFO-1234ze und 1,1-Difluorethan (HFC-152a) ausgewählt ist, als Wärmeübertragungszusammensetzung umfasst, wobei der Dampfverdichtungskreislauf einen Ölabscheider umfasst.

11. Anlage nach Anspruch 10, die aus den mobilen und stationären Anlagen zum Heizen mittels Wärmepumpe, zur Klimatisierung, zur Kühlung, zum Tiefgefrieren sowie aus den Verbrennungsmotoren ausgewählt ist.

12. Verfahren zur Stromerzeugung mittels eines Verbrennungsmotors, wobei das Verfahren nacheinander das Verdampfen der Wärmeübertragungszusammensetzung, das Entspannen der Wärmeübertragungszusammensetzung in einer Turbine, wodurch eine Stromerzeugung ermöglicht wird, das Verflüssigen der Wärmeübertragungszusammensetzung und das Verdichten der Wärmeübertragungszusammensetzung umfasst,

wobei das Verfahren die Verwendung eines Ölabscheiders umfasst, und
es sich bei der Wärmeübertragungszusammensetzung um eine Zusammensetzung handelt, die ein Schmiermittel auf Basis von Polyolestern und ein Kältemittel F umfasst, welches mindestens ein Tetrafluorpropen umfasst, das aus HFO-1234yf und HFO-1234ze und 1,1-Difluorethan (HFC-152a) ausgewählt ist.

13. Verfahren zum Erwärmen oder Abkühlen eines Fluids oder eines Körpers mittels eines Dampfverdichtungskreislaufs, der eine Wärmeübertragungszusammensetzung enthält, wobei das Verfahren nacheinander das Verdampfen der Wärmeübertragungszusammensetzung, das Verdichten der Wärmeübertragungszusammensetzung, das Verflüssigen der Wärmeübertragungszusammensetzung und das Entspannen der Wärmeübertragungszusammensetzung umfasst,

wobei der Verdichtungskreislauf einen Ölabscheider umfasst, und
wobei es sich bei der Wärmeübertragungszusammensetzung um eine Zusammensetzung handelt, die ein Schmiermittel auf Basis von Polyolestern und ein Kältemittel F umfasst, welches mindestens ein Tetrafluorpropen umfasst, das aus HFO-1234yf und HFO-1234ze und 1,1-Difluorethan (HFC-152a) ausgewählt ist.

## Claims

1. Use of a composition comprising a lubricant based on polyol esters, and a refrigerant fluid F comprising at least one tetrafluoropropene selected from HFO-1234yf and HFO-1234ze and 1,1-difluoroethane (HFC-152a) in a heat-transfer system containing a vapour-compression circuit comprising an oil separator.

2. Use according to Claim 1, **characterized in that** the polyol esters correspond to the following formula (I) :

$$R^1[OC(O)R^2]_n \qquad (I)$$

in which:

- $R^1$ is a linear or branched hydrocarbon radical, optionally substituted with at least one hydroxyl group and/or containing at least one heteroatom selected from the group consisting of -O-, -N-, and -S-;
- each $R^2$ is, independently of one another, selected from the group consisting of:

  o i) H;
  o ii) an aliphatic hydrocarbon radical;
  o iii) a branched hydrocarbon radical;
  o iv) a mixture of a radical ii) and/or iii) with an aliphatic hydrocarbon radical containing from 8 to 14 carbon atoms; and

- n is an integer of at least 2.

3. Use according to Claim 1, **characterized in that** the polyol esters are obtained from polyol selected from the group consisting of neopentyl glycol, glycerol, trimethylolpropane, pentaerythritol, dipentaerythritol, tripentaerythritol and mixtures thereof.

4. Use according to Claim 1 or 3, **characterized in that** the polyol esters are obtained from at least one branched carboxylic acid containing from 5 to 8 carbon atoms.

5. Use according to Claim 1, **characterized in that** the polyol esters are poly(neopentyl polyol) esters obtained by:

i) reacting a neopentyl polyol having the following formula (V):

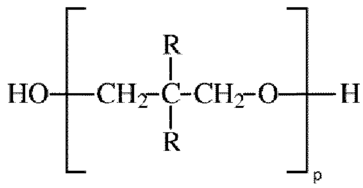

(V)

in which:

◦ each R represents, independently of one another, $CH_3$, $C_2H_5$ or $CH_2OH$;
◦ p is an integer ranging from 1 to 4;

with at least one monocarboxylic acid having from 2 to 15 carbon atoms, in the presence of an acid catalyst, the molar ratio between the carboxyl groups and the hydroxyl groups being less than 1:1, to form a partially esterified poly(neopentyl)polyol composition; and
ii) reacting the partially esterified poly(neopentyl)polyol composition obtained at the end of step i) with another carboxylic acid having from 2 to 15 carbon atoms, to form the composition of poly(neopentyl polyol) esters.

6. Use according to Claim 1, **characterized in that** the polyol esters have one of the following formulas (VIII) or (IX):

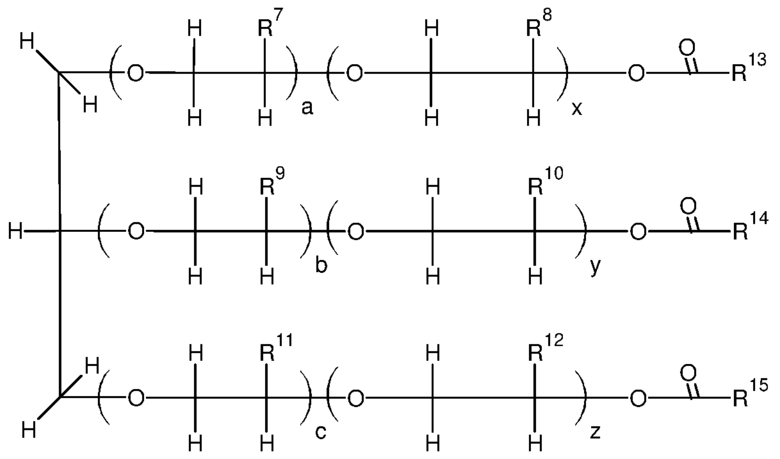

(VIII)

in which:

- $R^7$, $R^8$, $R^9$, $R^{10}$, $R^{11}$ and $R^{12}$ are, independently of one another, H or $CH_3$;
- a, b, c, y, x and z are, independently of one another, an integer;
- a+x, b+y and c+z are, independently of one another, integers ranging from 1 to 20;
- $R^{13}$, $R^{14}$ and $R^{15}$ are, independently of one another, selected from the group consisting of alkyls, which may be aliphatic or branched, alkenyls, cycloalkyls, aryls, alkylaryls, arylalkyls, alkylcycloalkyls, cycloalkylalkyls, arylcycloalkyls, cycloalkylaryls, alkylcycloalkylaryls, alkylarylcycloalkyls, arylcycloalkylalkyls, arylalkylcycloalkyls, cycloalkylalkylaryls and cycloalkylarylalkyls, $R^{13}$, $R^{14}$ and $R^{15}$ have from 1 to 17 carbon atoms and are able to be optionally substituted

or

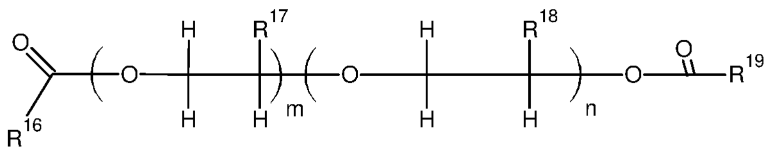

(IX)

in which:

- each of $R^{17}$ and $R^{18}$ is, independently of one another, H or $CH_3$;
- each of m and n is, independently of one another, an integer, with m+n being an integer ranging from 1 to 10;
- $R^{16}$ and $R^{19}$ are, independently of one another, selected from the group consisting of alkyls, which may be aliphatic or branched, alkenyls, cycloalkyls, aryls, alkylaryls, arylalkyls, alkylcycloalkyls, cycloalkylalkyls, arylcycloalkyls, cycloalkylaryls, alkylcycloalkylaryls, alkylarylcycloalkyls, arylcycloalkylalkyls, arylalkylcycloalkyls, cycloalkylalkylaryls and cycloalkylarylalkyls, $R^{16}$ and $R^{19}$ have from 1 to 17 carbon atoms and are able to be optionally substituted.

7. Use according to any one of Claims 1 to 6, **characterized in that** the refrigerant fluid F comprises one of the following mixtures:

| | | |
|---|---|---|
| HFO-1234yf | HFC-152a | |
| HFO-1234ze | HFC-152a | |
| HFO-1234yf | HFC-134a | HFC-152a |
| HFO-1234ze | HFC-134a | HFC-152a |

8. Use according to any one of Claims 1 to 7, **characterized in that** the refrigerant fluid F contains from 75.5% to 79.5% by weight of HFO-1234yf, from 12% to 16% by weight of HFC-152a and from 6.5% to 10.5% by weight of

HFC-134a.

**9.** Use according to any one of Claims 1 to 8, **characterized in that** the refrigerant fluid F contains 77.5% (± 0.2%) by weight of HFO-1234yf, 14% (± 0.2%) by weight of HFC-152a and 8.5% (± 0.2%) by weight of HFC-134a, said composition being azeotropic at a boiling temperature of between - 40.00°C and 70.00°C, at a pressure of between 0.5 and 21.0 bar abs. (± 0.5%), and more particularly a boiling temperature of 26.97°C (± 0.50°C) and a pressure of 7.3 bar abs. (± 0.50).

**10.** Heat-transfer facility comprising a vapour-compression circuit containing a composition comprising a lubricant based on polyol esters, and a refrigerant fluid F comprising at least one tetrafluoropropene selected from HFO-1234yf and HFO-1234ze and 1,1-difluoroethane (HFC-152a), as a heat-transfer composition, said vapour-compression circuit comprising an oil separator.

**11.** Facility according to Claim 10, selected from mobile or stationary facilities for heating via heat pump, air conditioning, refrigeration, freezing and heat engines.

**12.** Process for producing electricity by means of a heat engine, said process successively comprising the evaporation of the heat-transfer composition, expansion of the heat-transfer composition in a turbine making it possible to generate electricity, condensation of the heat-transfer composition and compression of the heat-transfer composition,

wherein the process comprises the use of an oil separator, and
said heat-transfer composition being a composition comprising a lubricant based on polyol esters, and a refrigerant fluid F comprising at least one tetrafluoropropene selected from HFO-1234yf and HFO-1234ze and 1,1-difluoroethane (HFC-152a).

**13.** Process for heating or cooling a fluid or a body by means of a vapour-compression circuit containing a heat-transfer composition, said process successively comprising the evaporation of the heat-transfer composition, compression of the heat-transfer composition, condensation of the heat-transfer composition and expansion of the heat-transfer composition,

said compression circuit comprising an oil separator, and
said heat-transfer composition being a composition comprising a lubricant based on polyol esters, and a refrigerant fluid F comprising at least one tetrafluoropropene selected from HFO-1234yf and HFO-1234ze and 1,1-difluoroethane (HFC-152a).

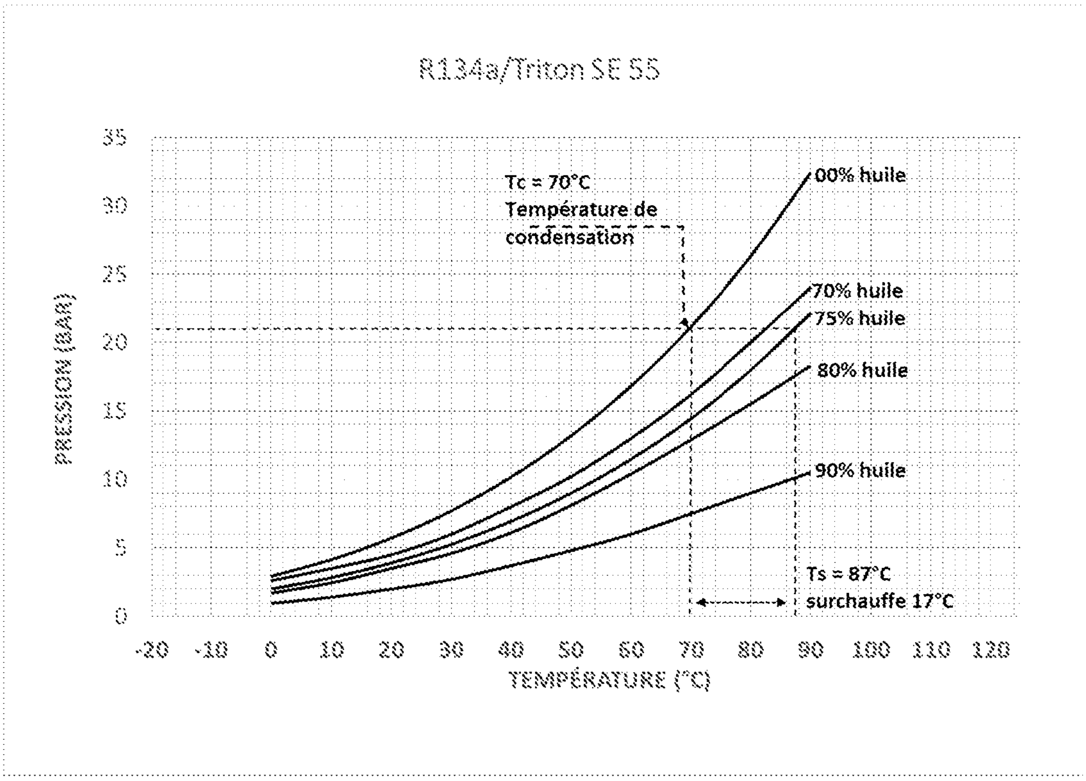
R134a/Triton SE 55
35
30
25
20
15
10
5
0
PRESSION (BAR)
-20 -10 0 10 20 30 40 50 60 70 80 90 100 110 120
TEMPÉRATURE (°C)
Tc = 70°C
Température de condensation
00% huile
70% huile
75% huile
80% huile
90% huile
Ts = 87°C
surchauffe 17°C

**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 4110388 A
- US 2016009974 A
- US 2012068104 A
- WO 2012177742 A
- US 5065990 A
- US 5363674 A


### Littérature non-brevet citée dans la description


- **T. JABBOUR.** Classification de l'inflammabilité des fluides frigorigènes basée sur la vitesse fondamentale de flamme. *Denis Clodic. Thèse,* 2004